# EUROPEAN PATENT APPLICATION

(11) **EP 4 850 934 A1**
(43) Date of publication of application: **09.12.2026**
(21) Application number: 26182980.8
(22) Date of filing: 03.06.2026
(51) Int. Cl.: B60D 1/06, B60D 1/24, B60D 1/26, B60D 1/48, B60D 1/54

(54) **RETRACTABLE TRAILER HITCH**

(30) Priority: 04.06.2025 US 202563817766 P
(71) Applicant: Ventra Group Co., Halifax NS B3J 2V1 (CA)
(72) Inventor: JARJOURA, Steve, Barrie, L4N-9R4 (CA); HUNG, Joaquin, Markham, L6C-2Y9 (CA); DOSWELL, Wayne, Aurora, L4G 4V4 (CA)
(74) Representative: Beck Greener LLP

(57) **Abstract**

A retractable trailer hitch assembly to extend and retract a trailer hitch component on a vehicle. The assembly has the component, a drive shaft on a drive axis; an outer housing with the drive shaft extending therein; and a retractable support member movably mounted relative to and within the outer housing, configured to translate linearly along the drive axis based on rotation of the drive shaft. The component is fixed with respect to the support member. A rotational guide with guiding surfaces rotates the support member after it has translated linearly downwardly by a predetermined amount from a retracted position (rotated inwardly and raised vertically). The guiding surfaces are configured such that rotation moves the support member to an extended position, extending outwardly from the vehicle. A lock prevents rotation of the support member in the extended position providing load bearing support against force(s) applied to the component that create(s) a torque on the support member.

## Description

### BACKGROUND

### Field

The present disclosure is generally related to an articulating mechanism to extend and retract a trailer hitch component, i.e., a retractable trailer hitch.

### Description of Related Art

The majority of current trailer hitch devices or receivers are fixed to the vehicle structure extending through or beneath the rear bumper of a vehicle. Generally, hitch receivers are a static part of the trailer hitch assembly and protrude from the back of the vehicle. They are not hidden, and are visible from the rear of the vehicle.

There are few existing powered and manual retractable trailer hitch assemblies on the market (mainly in Europe). Some may be hidden via using a compound rotary mechanism for articulation. These hidden trailer hitch assemblies are limited in load carrying capacity, and in some cases, limit the use of other after-market utility attachments, such as bike racks or luggage racks.

### SUMMARY

According to the present invention, there is provided a retractable trailer hitch assembly to extend and retract a trailer hitch component on a vehicle, the assembly comprising: the trailer hitch component; a drive shaft extending along a drive axis and configured for rotational movement; an outer housing mounted relative to the drive shaft with the drive shaft extending therein; a retractable support member movably mounted relative to and within the outer housing, the retractable support member configured to translate linearly along the drive axis in response to rotation of the drive shaft, the trailer hitch component being fixed with respect to the retractable support member; a rotational guide including guiding surfaces configured to rotate the retractable support member after said retractable support member has translated linearly downwardly by a predetermined amount from a retracted position wherein the trailer hitch component is rotated inwardly and raised vertically from an extended position, the guiding surfaces being configured such that the rotation moves the retractable support member to the extended position wherein the trailer hitch component extends outwardly from the vehicle; and a lock for preventing rotation of the retractable support member in the extended position to provide load bearing support against a force applied to the trailer hitch component that creates a torque on the retractable support member.

In an embodiment, the retractable support member comprises a barrel cam.

In an embodiment, the guiding surfaces are provided on the outer housing.

In an embodiment, the guiding surfaces are provided on the retractable support member.

In an embodiment, the rotational guide further comprises at least one ball bearing configured to interface with and move along the guiding surfaces, so as to cause the rotation of the retractable support member.

In an embodiment, the rotational guide has two guiding surfaces on opposite sides relative to one another, and wherein two ball bearings are provided for moving within the two guiding surfaces.

In an embodiment, the assembly further comprises a support tube positioned relative to the retractable support member, the retractable support member and the support tube both being configured to translate linearly along the drive axis in response to rotation of the drive shaft.

In an embodiment, the at least one ball bearing is nested between the retractable support member and the outer housing, and wherein the support tube surrounds the retractable support member.

In an embodiment, the support tube comprises a threaded casing contained within the outer housing, wherein the at least one ball bearing is nested between the threaded casing and the outer housing, and wherein the threaded casing is configured to translate linearly along the drive axis in response to rotation of the drive shaft to move the retractable support member.

In an embodiment, the assembly further comprises a driver operatively coupled to the retractable support member and provided on the drive shaft, the driver configured to translate linearly along the drive axis in response to rotation of the drive shaft to thereby move the retractable support member.

In an embodiment, the driver comprises rotary drive ball bearings positioned therein to permit rotation about the drive shaft while maintaining axial translation, and wherein the retractable support member includes a circumferential groove for receiving the rotary drive ball bearings.

In an embodiment, the guiding surfaces comprise a helical section configured to cause the rotation of the retractable support member.

In an embodiment, the helical section is configured to rotate the retractable support member up to and including approximately 90 degrees as the retractable support member moves between the retracted position and the extended position.

In an embodiment, the guiding surfaces further comprises at least one linear section extending parallel to the drive axis.

In an embodiment, the assembly further comprises radially extending anti-rotation keys or stops configured to prevent rotation of the trailer hitch component about the drive axis.

In an embodiment, the lock includes: at least one radial flange associated with the retractable support member; and one or more corresponding locking surfaces associated with the outer housing configured to engage the at least one radial flange when in the retractable support member is provided in the extended position to stabilize vertical movement and resist lateral and torsional loads.

In an embodiment, the assembly further comprises a mounting bracket for mounting the assembly in an operative position to the vehicle.

In an embodiment, the drive shaft is powered by a motorized actuator configured to rotate the drive shaft and thus move the retractable support member.

It is an aspect of this disclosure to provide a retractable trailer hitch assembly to extend and retract a trailer hitch component. The assembly comprises: the trailer hitch component; a drive shaft extending along a drive axis and configured for rotational movement; an outer housing mounted relative to the drive shaft with the drive shaft extending therein; a retractable support member movably mounted relative to and within the outer housing, the support member configured to translate linearly along the drive axis in response to rotation of the drive shaft, the trailer hitch component being fixed with respect to the support member; and a rotational guide including guiding surfaces configured to rotate the support member after said support member has translated linearly downwardly by a predetermined amount from a retracted position wherein the trailer hitch component is rotated inwardly and raised vertically from an extended position, the guiding surfaces being configured such that the rotation moves the support member to the extended position wherein the trailer hitch component extends outwardly from the vehicle. Also provided in the assembly is a lock for preventing rotation of the support member in the extended position to provide load bearing support against a force applied to the trailer hitch component that creates a torque on the support member.

Other aspects, features, and advantages of the present disclosure will become apparent from the following detailed description, the accompanying drawings, and the appended claims.

### BRIEF DESCRIPTION OF THE DRAWINGS

Various embodiments are disclosed, by way of example only, with reference to the accompanying schematic drawings in which features are shown with corresponding reference symbols to indicate corresponding parts and like elements. The drawings form part of this original disclosure, in which
FIG. 1 shows a perspective view of a back bumper end on a vehicle with a retractable trailer hitch assembly in accordance with an embodiment of the present disclosure, the assembly being in an extended position or deployed position;
FIG. 2 illustrates a perspective view of the retractable trailer hitch assembly alone in its extended position or deployed position;
FIGS. 3-4 illustrate first and second perspective views of the retractable trailer hitch assembly alone in a retracted position;
FIG. 5 is an exploded view of exemplary parts of the retractable trailer hitch assembly in accordance with an embodiment of the disclosure;
FIG. 6 is a detailed view of an internal surface and guide path forming part of a rotational guide and guiding surfaces in part of an outer housing in the retractable trailer hitch assembly, in accordance with embodiments herein;
FIGS. 7-9 show movement of an exemplary retractable support member, in the form of a barrel cam, relative to the outer housing in the retractable trailer hitch assembly, in accordance with an embodiment of the disclosure;
FIG. 10 illustrates a detailed view of an end of the barrel cam of FIGS. 7-9 in a locked position, in accordance with an embodiment of this disclosure;
FIG. 11 shows a detailed view, in partial cross-section, of translation mechanisms as well as securement and anti-rotation mechanism features that are part of the retractable trailer hitch assembly, which is in its extended position, in accordance with an embodiment of the disclosure;
FIGS. 12-14 illustrate alternate cross-sectional views of the features shown in FIG. 11;
FIG. 15 illustrates a first cross-sectional view of the securement and anti-rotation mechanism features shown in FIGS. 11-14, in accordance with an embodiment;
FIG. 16 illustrates a second cross-sectional view of the features shown in FIG. 15, in accordance with an embodiment;
FIG. 17 illustrates a cross-sectional view of parts of a locking assembly and securement and anti-rotation mechanism features, in accordance with an embodiment;
FIGS. 18A and 18B illustrate, respectively, partial cross-section view in perspective and a detailed perspective view of anti-rotation mechanism features of the retractable trailer hitch assembly disclosed herein, in a deployed locked position, in accordance with an embodiment
FIGS. 19A and 19B illustrate, in respective cross-sectional views, load bearing contact surfaces, forces, and alignment of anti-rotation mechanism features of the retractable trailer hitch assembly disclosed herein, in accordance with an embodiment.
FIG. 20 shows a perspective view of a back bumper end on a vehicle with the retractable trailer hitch assembly in accordance with an embodiment of the present disclosure, the trailer hitch assembly being in a retracted position;
FIGS. 21 and 22 show, respectively, a perspective view and a back view of an inside of the back bumper of FIG. 20, showing the trailer hitch assembly in the retracted position; and
FIGS. 23 and 24 show, respectively, a perspective view and a back view of an inside of the back bumper of FIG. 1, showing the trailer hitch assembly in the extended position.
FIGS. 25-26 illustrate first and second perspective views of another embodiment of a retractable trailer hitch assembly alone in an extend position and a retracted position, respectively;
FIG. 27A is an exploded view of the parts of the retractable trailer hitch assembly of FIGS. 25-26 in accordance with an embodiment of the disclosure;
FIG. 27B is a detailed view of gear and actuator parts used in embodiments of the retractable trailer hitch assembly, in accordance with an embodiment of the disclosure;
FIG. 27C is a detailed, perspective view of parts of an outer housing and a guide path on an exemplary barrel cam of the retractable trailer hitch assembly of FIGS. 25-26 in accordance with an embodiment of the disclosure;
FIGS. 27D-27F show additional views of the outer housing and barrel cam of FIGS. 25-27A in accordance with an embodiment of the disclosure;
FIG. 28 shows a perspective view of a back bumper end on a vehicle with the retractable trailer hitch assembly of FIGS. 25-26 in accordance with an embodiment of the present disclosure, the trailer hitch assembly being in a retracted position;
FIGS. 29 and 30 show, respectively, perspective views of the back bumper end of FIG. 28, showing the trailer hitch assembly in an intermediate position and extend position, respectively;
FIG. 31 illustrates another perspective view of an assembly according to embodiments herein utilizing a ball hitch directly connected to parts (e.g., support tube) of the assembly;
FIG. 32 illustrates a yet another perspective view of an including a trailer hitch component including both a receiver and a ball hitch according to embodiments herein; and
FIGS. 33A-33C illustrate front and back perspective views of a mounting bracket for mounting a retractable trailer hitch assembly to a vehicle, in accordance with embodiments herein.

### DETAILED DESCRIPTION OF THE PREFERRED EMBODIMENT(S)

As evident by the drawings and below description, this disclosure relates to an articulating mechanism designed to extend and retract a trailer hitch component that is part of a trailer hitch assembly for a vehicle. In addition to enhancing customer interface, this disclosure allows for the trailer hitch component (e.g., such as a receiver or ball hitch) to be easily accessible as a selectively storable component, so that the trailer hitch component not always visible (i.e., partially or entirely hidden from normal view) and protruding from the back of the vehicle (when not in use). Integrating the trailer hitch component in the manner as disclosed herein such that it may be stored up at a location beneath the vehicle envelope allows for convenience, packaging, and styling enhancement. Further, to the mechanical and operational system and method to deploy the trailer hitch component, this disclosure provides mechanisms to secure and prevent rotation of the hitch component while in its extended position.

When directions are referenced herein, unless the context dictates otherwise, those refer to the conventional directions of a wheeled vehicle in which the mechanism is to be installed.

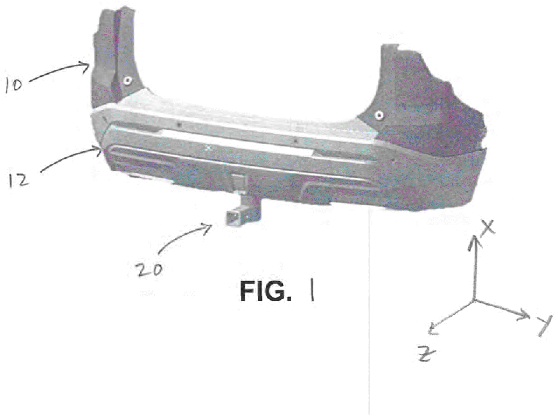

FIG. 1 shows a perspective view of a back bumper end 12 (or simply bumper 12) on a vehicle 10 with a retractable trailer hitch assembly 20 in accordance with an embodiment of the present disclosure. The retractable trailer hitch assembly 20 is designed as an articulating mechanism to extend and retract a trailer hitch component 24 (e.g., shown here as a receiver) that has an attachment mechanism 26 thereon. The type of vehicle 10 onto which the retractable trailer hitch assembly 20 is mounted and assembled is not intended to be limiting in any way. For example, the vehicle 10 may be a sport utility vehicle ("SUV"), and the retractable trailer hitch assembly may be used to assist a person or drive when pulling a trailer. It is also contemplated that the retractable trailer hitch assembly 20 may also be mounted to industrial vehicles, such as delivery vans, cube vans, etc.

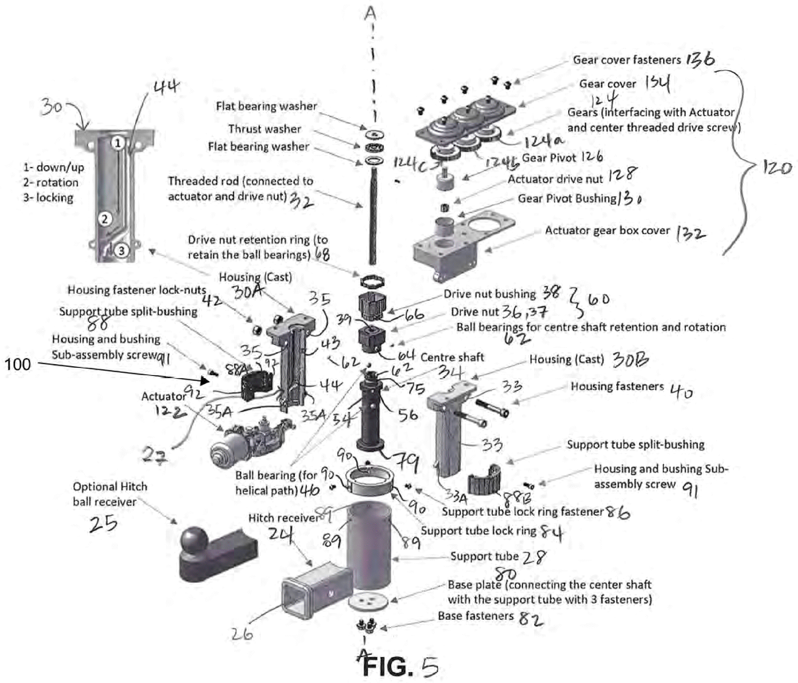

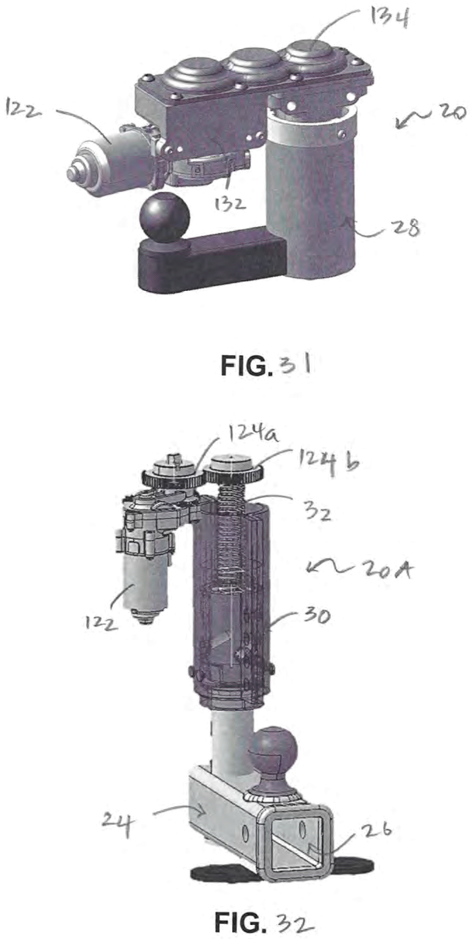

The type of component - e.g., a receiver - is not intended to be limiting. Trailer hitch receivers 24 are commonly used to allow different size and/or style trailer hitches (e.g., a ball hitch, multi-ball hitch, etc.) to be interchanged. FIG. 32 shows an example of an embodiment of a trailer hitch component 24 including both a receiver and a ball hitch which may be utilized with the embodiments described herein. In some designs, the hitch itself may be connected directly without a receiver. FIG. 31 shows an example of a ball hitch directly connected to parts (e.g., support tube 28) of the assembly 20 in place of a receiver. The term "trailer hitch component" is used herein to refer to both covering both designs where a trailer hitch receiver is included in the mechanism and where the hitch is connected directly to the mechanism without an intervening receiver. The embodiments illustrated use the receiver 24, but that is not intended to be limiting. In addition, the attachment mechanism 26 is also not intended to be limiting in any way. In embodiments, attachment mechanism 26 may be configured as a receiver tube including an opening for receiving, e.g., a ball mount coupler, a trailer coupler, a ball mount platform, and the like. In embodiments, trailer hitch receiver 24 may be connected (e.g., via fasteners) or welded onto a tubular body of support tube 28, e.g., such that the trailer hitch receiver 24 extends laterally or radially from the support tube 28. In an embodiment, an optional hitch ball receiver 25 (see FIG. 5) may be placed in addition to (e.g., within a receiving opening of attachment mechanism 26), or alternatively onto (e.g., integrally formed on, welded onto, i.e., in place of the attachment mechanism 26), the support tube 28. In an embodiment, optional ball receiver 25 may be attached or secured directly onto the body of the trailer hitch receiver 24 (e.g., welded onto a top surface thereof, above the forward facing attachment mechanism 26).

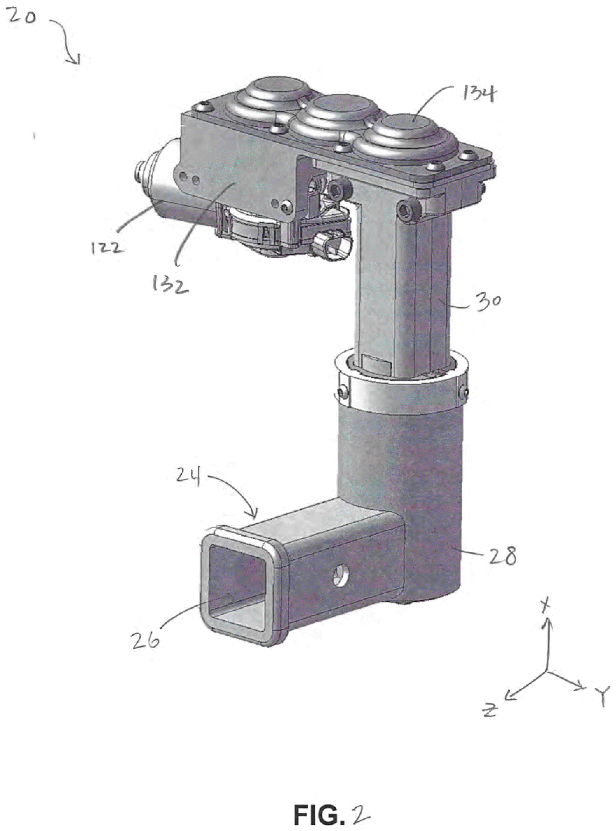

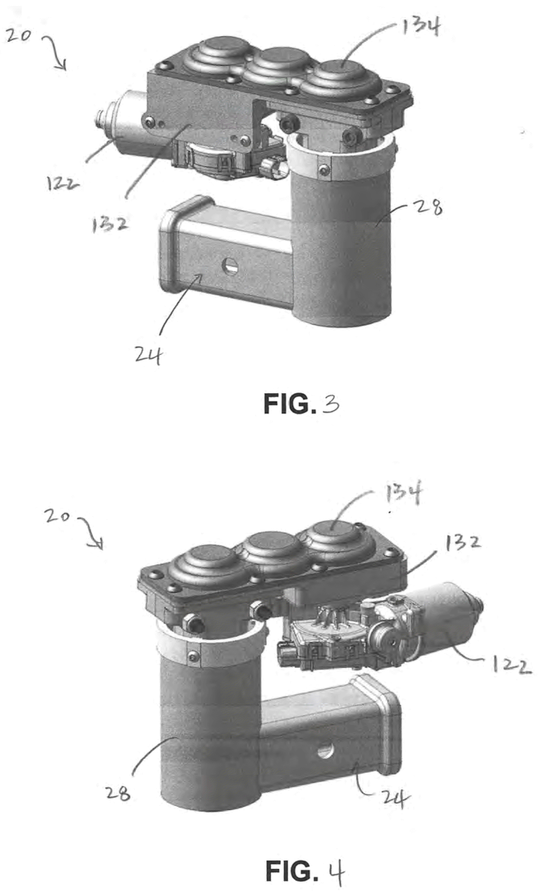

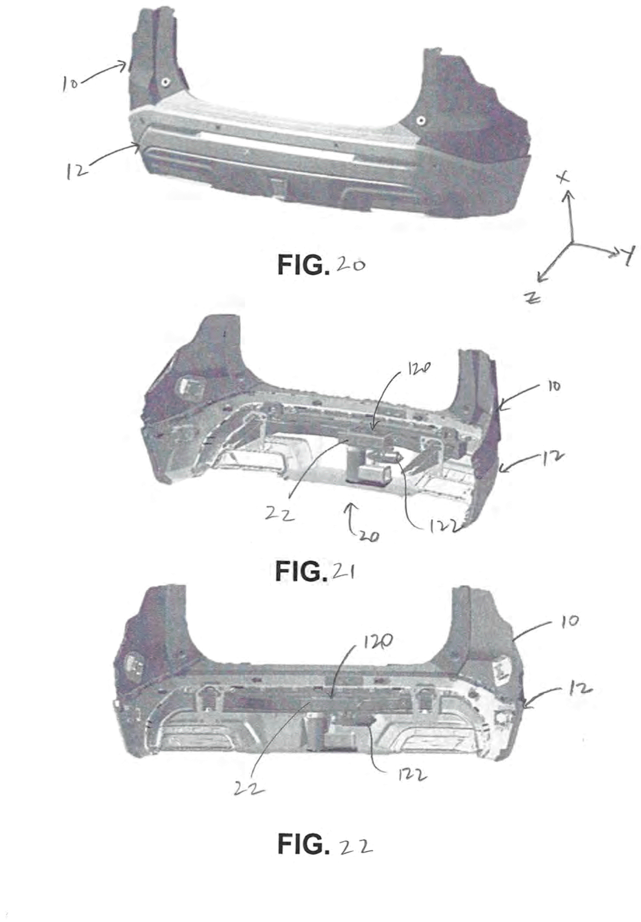

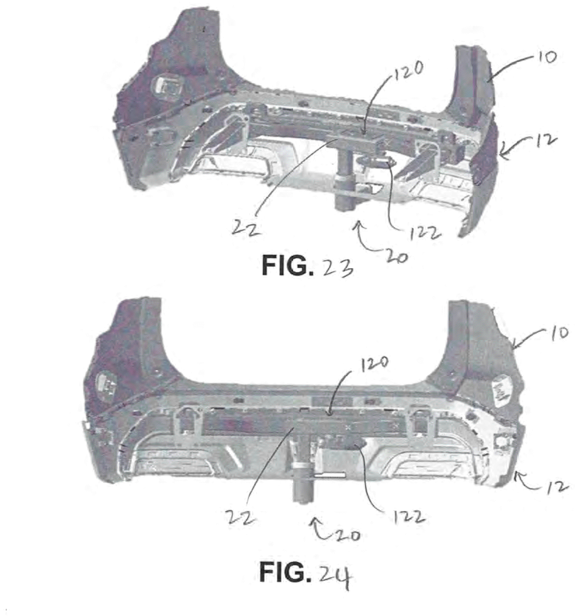

In FIG. 1, the retractable trailer hitch assembly 20 is shown in an extended position or deployed position, which also visible in FIG. 2 (showing the assembly 20 alone when in its extended position). As will be described herethroughout, when the retractable trailer hitch assembly 20 is extended or deployed, the trailer hitch receiver 24 is provided in a position that is below the bumper 12 (in an X-direction as indicated in FIG. 1) for accessibility (e.g., for securing a trailer) with a front end of the attachment mechanism 26 thereof facing the rear end of the vehicle 10 (in a Z-direction) and ready for use. In the illustrated embodiment, retractable trailer hitch assembly 20 is mounted in a center of a length the bumper 12 (the length extending in a Y-direction), e.g., so that the loads applied to the retractable trailer hitch assembly 20 are secured and distributed relative to the vehicle 10. Further details regarding an example of mounting of retractable trailer hitch assembly 20 are shown and described with reference to FIGS. 20-24 later. When the retractable trailer hitch assembly 20 is in a retracted position, such as shown in FIG. 3, the trailer hitch receiver 24 is rotated away from use and withdrawn into the back bumper end 12 (see also FIGS. 20, 21, and 22), hidden away from view and use. Specifically, when the trailer hitch assembly 20 is retracted, the trailer hitch receiver 24 of the retractable trailer hitch assembly 20 may positioned within the bumper 12. When in an extended position, the trailer hitch receiver 24 is moved downwardly relative to the back bumper end 12 and rotated such that trailer hitch receiver 24 is ready for use (see FIG. 1 and also FIGS. 23 and 24). That is, the trailer hitch receiver 24 is configured to rotate exactly or approximately 90 degrees from a stored position, so that the hitch receiver 24 and front end of the attachment mechanism 26 is accessible. An example of such positions and rotation may be seen when comparing FIGS. 3-4 to FIG. 2, when moving from its retracted position to its extended position. These elements and other features will be explained in detail below. In some embodiments, the range of rotation may be more or less than 90 degrees also.

The retractable trailer hitch assembly 20 is mounted in an operative position, e.g., within the bumper 12, to the vehicle 10 via a mounting bracket 22 (see FIGS. 21-24 for additional details). Parts of the assembly 20 are configured to be mounted in a manner such that they are moved vertically and rotated horizontally relative to the bumper 12 or back end of the vehicle. In embodiments, the retractable trailer hitch assembly 20 includes the trailer hitch component 24, i.e., shown in this embodiment as receiver 24 with its attachment mechanism 26 (e.g., receiver tube) and being connected to a support tube 28, and an outer housing 30 mounted relative to a vertically extending drive shaft 32 extending along a drive axis A-A and configured for rotational movement. The outer housing 30 has the drive shaft 32 extending therein. Also provided as part of the assembly 20 is an extendible or retractable support member 34 that is movably mounted relative to and within the outer housing 30. The retractable support member 34 is configured to translate linearly along the drive axis A-A in response to rotation of the drive shaft 32. Also, the trailer hitch component/receiver 24 is fixed with respect to the retractable support member 34. In the exemplary illustrated embodiments shown in FIGS. 5-14, for example, the retractable support member 34 is provided in the form of a barrel cam 34 that is configured to be selectively driven and translated along the drive axis A-A between at least two positions. According to embodiments, the assembly 20 further includes a rotational guide 27 (or rotational guide system 27) including guiding surfaces configured to rotate the retractable support member / barrel cam 34 after the retractable support member has translated linearly downwardly by a predetermined amount from a retracted position, wherein the trailer hitch receiver 24 is rotated inwardly and raised vertically from an extended position. The guiding surfaces may be configured such that the rotation moves the retractable support member / barrel cam 34 to the extended position wherein the trailer hitch component / receiver 24 extends outwardly from the vehicle. Examples of features associated with the rotational guide according to embodiments herein are detailed later below. In particular, in some embodiments, during translational linear movement along the drive axis, the barrel cam 34 is configured to also rotate or pivot about drive axis A-A and thus rotate relative to the outer housing 30 due to the rotational guide, thereby allowing the trailer hitch component/receiver 24 to be moved between the retracted position and the extended position. Again, with movement and rotation into the extended position, the trailer hitch component/receiver extends outwardly from the vehicle and the attachment mechanism 26 of the trailer hitch component/receiver 24 is accessible for attachment (e.g., as shown in FIGS. 1 and 2), and in a retracted position the trailer hitch receiver 24 is rotated inwardly and raised vertically from the extended position (e.g., as shown in FIG. 3). A lock assembly 100 or locking mechanism (or more generally, a "lock") is also provided in the assembly 20 in order to secure and lock trailer hitch receiver 24 in at least the extended position. The lock assembly 100 acts as an anti-rotation mechanism for locking the trailer hitch receiver 24 in the extended position, so as to limit or prevent rotation of the trailer hitch receiver 24. Specifically, the lock 100 is designed for preventing rotation of the retractable support member 34 / barrel cam in the extended position to provide load bearing support against a force applied to the trailer hitch component 24 / receiver that creates a torque on the retractable support member 34 (e.g., such as when a load is attached thereto). That is, the lock 100 (and additional mechanisms) provided on the retractable trailer hitch assembly 20 also assists in supporting loads (e.g., longitudinal and lateral forces) applied thereto.

The predetermined amount of downward movement included in the assembly (and conversely the predetermined amount of upward movement during retraction) may vary between assemblies depending on the structure of the vehicle body. For example, if the hitch component is moved to a retracted position behind a vehicle bumper, the predetermined amount may be sufficient for the trailer hitch component 24 to be lower than the bumper so that it avoids interference with the bumper when it is rotated out to the extended position. The bumper height may vary between vehicles, and thus the predetermined amount may likewise vary. Likewise, in some vehicle designs full concealment of the trailer hitch component 24 may be desired such that a higher location behind the bumper is used; whereas in other designs full concealment may not be required and the height location may be lower and may also be dictated by other parameters, such as ensuring ground clearance. The same applies to other structures that may be found at the rear end of a vehicle, such as frame members. Likewise, the predetermined amount may be influenced by the height of the vehicle, as with a higher ground clearance vehicle more downward travel may be desired in order to ensure the trailer hitch component 24 is at a proper vertical height for engaging with a trailer (and likewise less downward travel may be needed with a lower ground clearance vehicle). Thus, the term "predetermined amount" is not limited to any specific value, and instead is determined by the mechanics of the assembly which causes the trailer hitch component 24 to be initially lowered from the retracted position as it is moved in a deploying manner to its extended position.

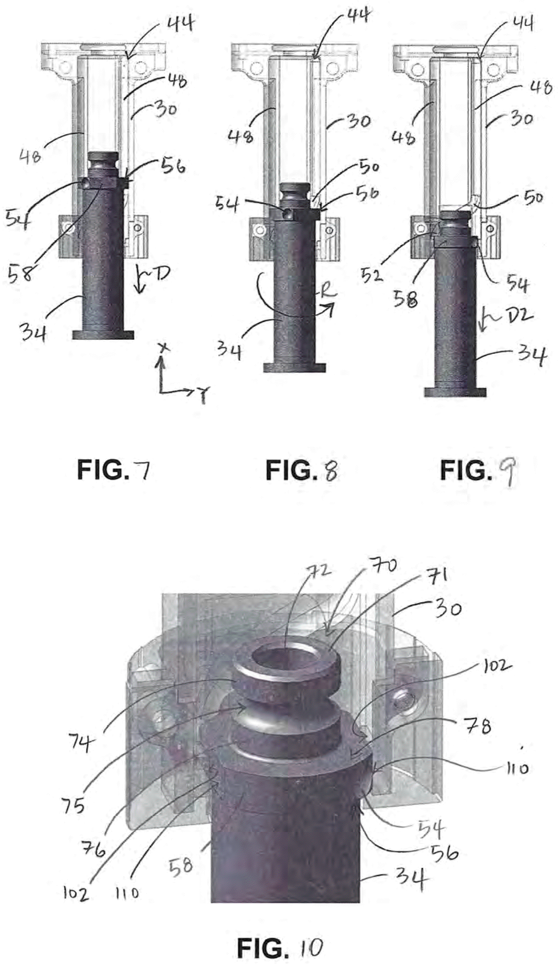

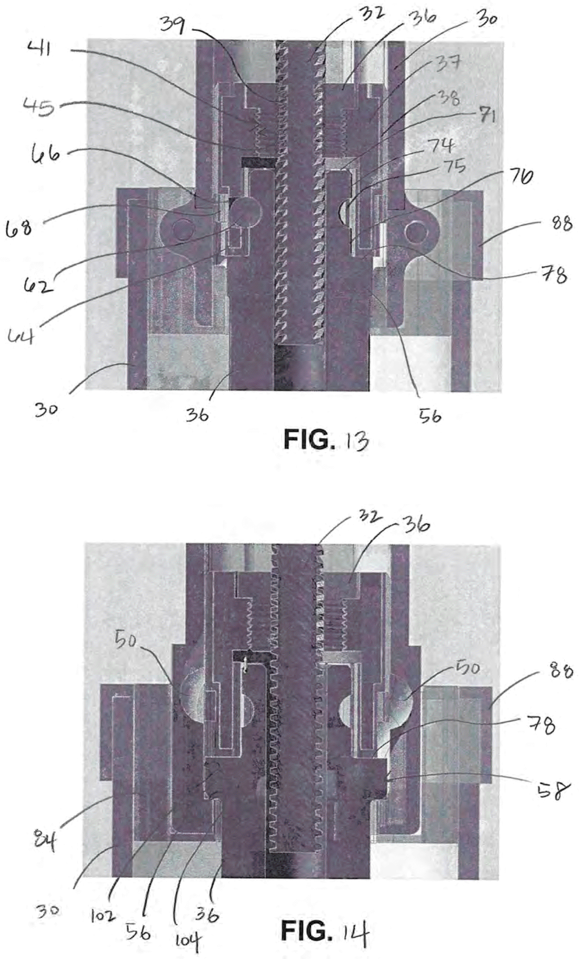

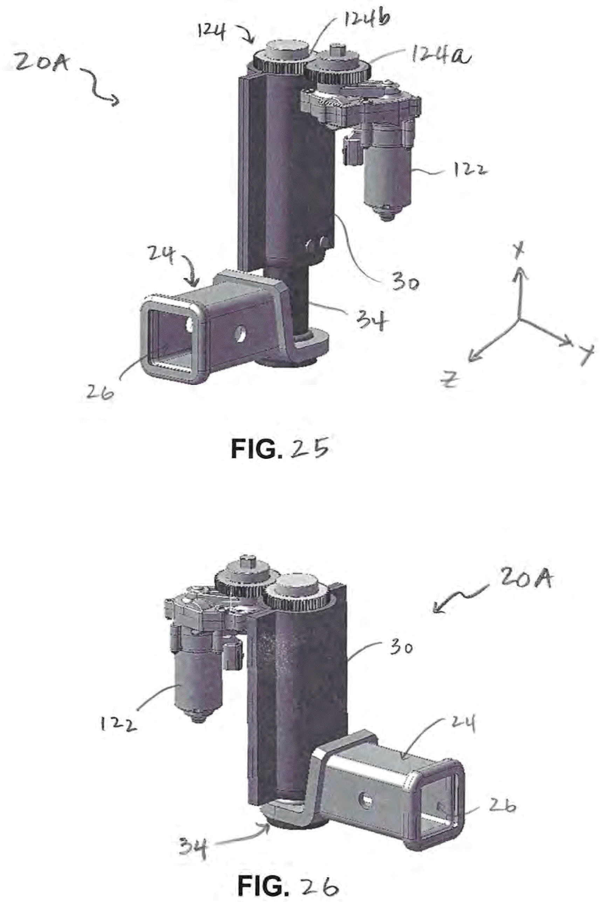

The drive shaft 32 is configured to extend through the outer housing 30 and along drive axis A-A. Drive shaft 32 may be a gear-driven, threaded rod driven via a powered actuator (e.g., motor) and gear box, an example of which is described with respect to and illustrated in FIGS. 5 and FIGS. 21-24, in accordance with embodiments. Another embodiment of a drive shaft labeled as 32A and also in the form of a threaded rod is shown in and described with reference to FIGS. 25-27B. Movement of the drive shaft 32 is translated to the barrel cam 34 for its movement relative to outer housing 30. Barrel cam 34 includes a central shaft defined by a top portion with a leading edge 71 and opening 72 (see FIG. 10), a bottom portion 79 (see FIG. 5), and a central bore 31 (e.g., see FIGS. 13-14) therethrough. The opening 72 and central bore 31 are provided for receipt of at least a portion of the drive shaft 32 within the barrel cam 34. Specifically, during driving movement, the drive shaft 32 may rotate within the central bore 31. Barrel cam 34 will thus move along drive axis A-A and relative to the outer housing 30, using, e.g., a drive block 60, as discussed throughout this disclosure.

In some embodiments, the actuator may be manually driven, such as by a crank handle, a jack tool driven rotational input, or the like. Thus, although the illustrated embodiments use a motor for imparting power for the extending and retracting movements, that power may also be supplied manually as well.

As shown in FIG. 5, the outer housing 30 may include two housing members 30A and 30B, each member 30A and 30B forming a half of the housing 30. Housing members 30A and 30B are configured for alignment around the drive shaft 32, barrel cam 34, drive block 60, and other parts. The housing members 30A and 30B are aligned via corresponding holes 33 and 35 (respectively) therein and assembled together via, for example, housing fasteners 40 extending through aligned holes 33, 35 and secured via housing fastener locks nuts 42 on fasteners 40. Similar holes 33A, 35A may be provided on a bottom portion of housing for alignment and securement via fasteners (not shown) as well.

As briefly mentioned, the rotational guide 27 (or rotational guide system 27) enables rotation of the retractable support member / barrel cam 34 after linear downward movement of a predetermined amount or distance from the retracted position. According to embodiments herein, the guiding surfaces include a helical section configured to cause the rotation of the retractable support member 34. In embodiments, the helical section is configured to rotate the retractable support member 34 up to and including approximately 90 degrees as the retractable support member / barrel cam 34 moves between the retracted position and the extended position. In some embodiments, the guiding surfaces further include at least one linear section extending parallel to the drive axis A-A, for linear movement of the barrel cam 34 / retractable support member.

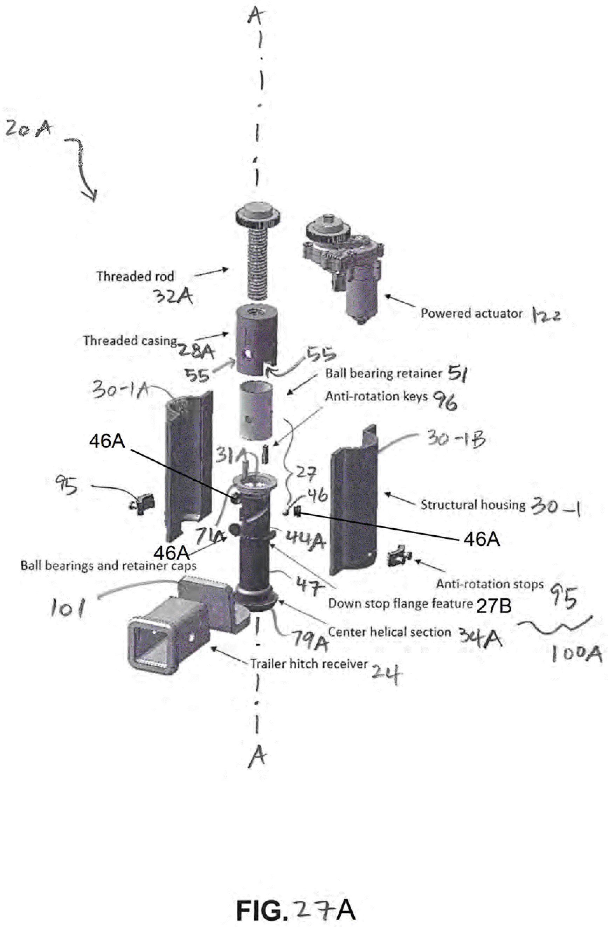

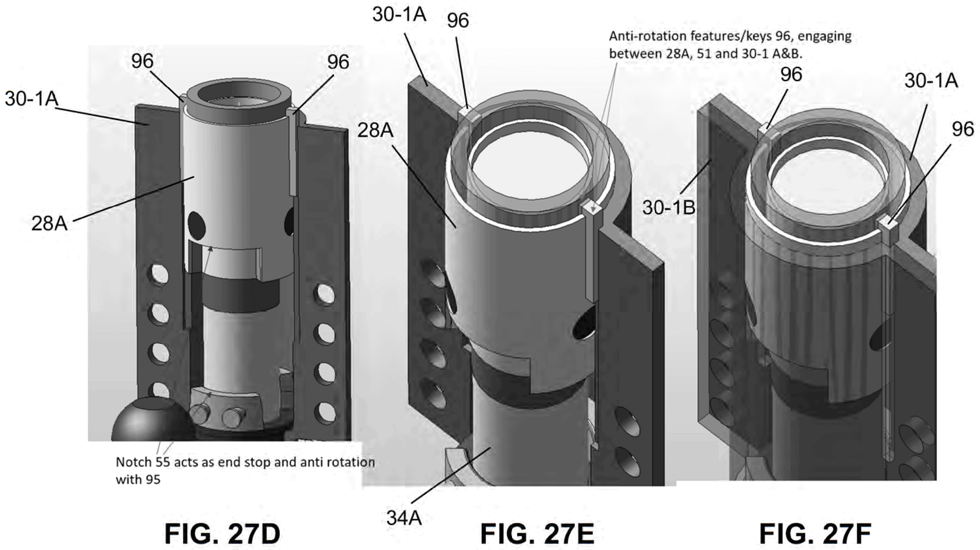

As described herein, the rotational guide 27 enables such linear and helical/rotational movement via inclusion of guiding surfaces (e.g., grooves) as well as other mechanical devices (such as ball bearings), or other types of helically configured designs, that impart helical movement to the support member 34. In an embodiment, the guiding surfaces may be provided on the outer housing 30, e.g., in the form of one or more grooves or paths 44, which is shown in FIGS. 5-9, for example. In another exemplary embodiment, the guiding surfaces may be provided on the retractable support member 34 / barrel cam, such as shown in and described later with reference to FIG. 27A, for example. Also, in embodiments, the rotational guide 27 may further include at least one ball bearing configured to interface with and move along the guiding surfaces, so as to cause the rotation of the retractable support member 34. In some embodiments, the rotational guide 27 has two guiding surfaces on opposite sides relative to one another, and two ball bearings are provided for moving within the two guiding surfaces. In some embodiments, the rotational guide 27 includes a support tube (e.g., tube 28 or 28A) positioned relative to the retractable support member 34; in such configuration, the retractable support member 34 and the support tube may both be configured to translate linearly along the drive axis A-A in response to rotation of the drive shaft 32 (or 32A).

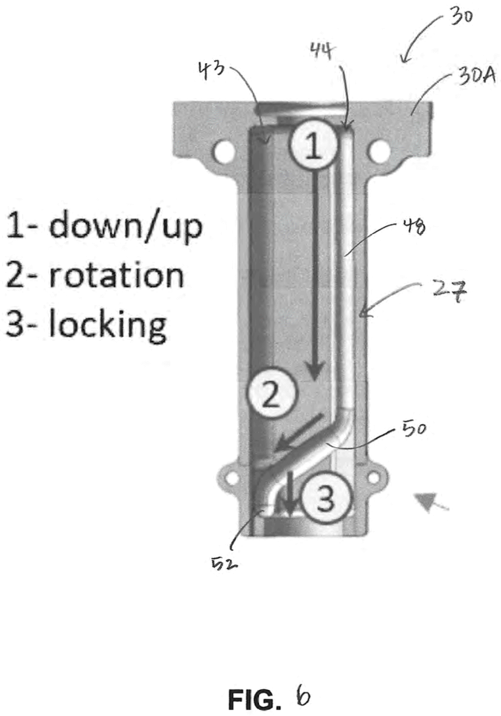

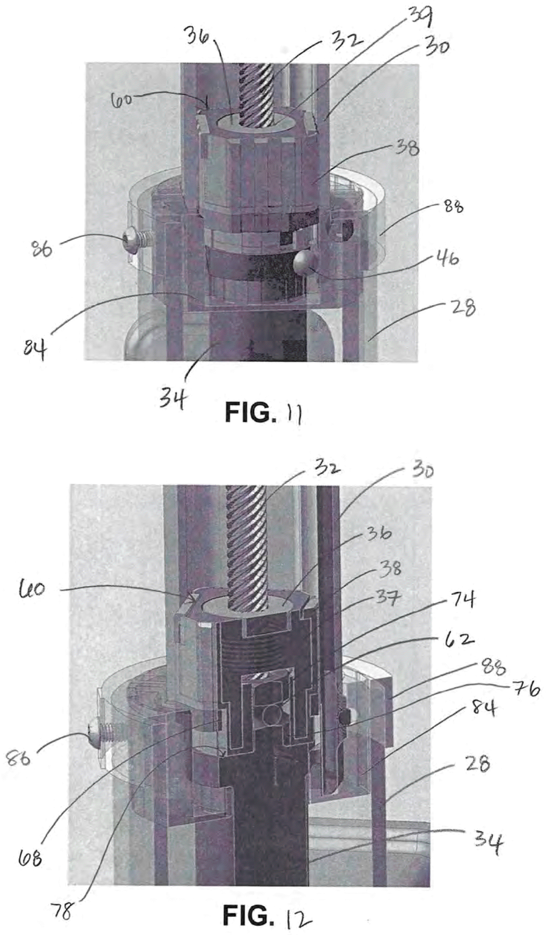

Turning to the exemplary embodiment of FIGS. 5-9, the outer housing 30 includes an internal guide path 44, or barrel-cam path, on an internal surface 43 thereof. According to embodiments, the internal guide path 44 may be provided in at least one of the housing members 30A or 30B. In the illustrated embodiment, there are two paths 44 provided, one on each internal surface 43 of each of the housing members 30A and 30B. For illustrative purposes only, as shown in FIGS. 5 and 6, an internal guide path 44 is shown and described with reference to housing member 30A; however, it should be understood that such path 44 is also provided on the internal surface of housing member 30B. The internal guide path(s) 44 is/are designed to direct the barrel cam 34 for linear and rotational (or pivotal) movement along the vertical drive axis A-A and relative to the outer housing 30, when assembled. The at least one ball bearing 46 may be nested between the retractable support member 34 and outer housing 30. Specifically, in accordance with embodiments herein, at least one barrel cam ball bearing 46 (or simply "ball bearing" 46) is nested between an outer surface of the barrel cam 34 and an inner surface 43 of the outer housing 30 (as seen in FIG. 11, for example). That is, the at least one ball bearing 46 is configured to interface with and move along the internal guide path 44 of the outer housing 30. In the exemplary embodiment herein, two ball bearings 46 are provided, each on either side of the barrel cam 34 for nesting within and movement along two corresponding internal guide paths 44 in housing members 30A and 30B of outer housing 30. By nesting ball bearings 46 in the paths 44, the barrel cam 34 may be directed for travel and rotation by the ball bearings following the paths 44. The support tube 28 may surround the barrel cam 34.

The barrel cam ball bearings 46 may be inserted or mounted into receiving openings 54 of a collar portion 56 on the barrel cam 34, such that each ball bearing engages the corresponding internal guide path, according to embodiments herein. Collar portion 56 includes a radial flange extending perpendicular to the drive axis A-A, with an engagement surface 58 provided around its outer edge. This flange of collar portion 56 is designed to act as a down-stop or end of travel stop for the barrel cam 34, i.e., when moved linearly/vertically towards and into a fully extended or final position via drive shaft 32. In an embodiment, two receiving openings 54 are provided on the collar portion 56 such the ball bearings 46 received therein are effectively on opposite sides of the barrel cam 34 for guidance by guide paths 44 in each housing member 30A and 30B. In an embodiment, the receiving openings 54 are provided on or in the engagement surface 58 or outer edge of the collar portion 56.

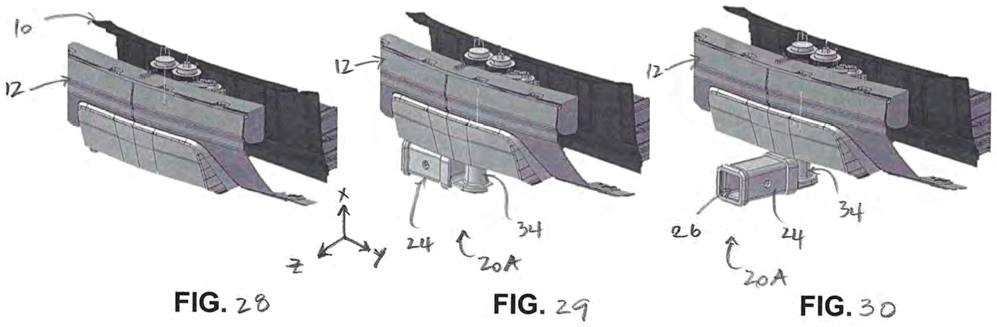

As represented in FIG. 6, each guide path 44 includes a vertical linear section 48, a helical section 50, and a locking section 52. Linear section 48 extends parallel to the vertical drive axis A-A according to embodiments herein. The linear section 48 of the guide path 44 allows for the corresponding ball bearings 46 nested between the barrel cam 34 and outer housing 30 to move linearly, or vertically up and down, relative to the drive axis A-A. When the retractable trailer hitch assembly 20 is in a retracted position, the barrel cam 34 and its ball bearings 46 are positioned at a top portion of the linear section 48 of guide path 44 (i.e., a top portion of the outer housing 30). FIGS. 7-9 show movement of barrel cam 34 relative to the outer housing 30 in the retractable trailer hitch assembly 20, in accordance with an embodiment. FIG. 7 illustrates an example of the barrel cam 34 being driven linearly in a downward direction relative to the outer housing 30, i.e., along vertical linear section 48 towards an intermediate or partially extended position, such as when the retractable trailer hitch assembly is being moved from its retracted position to its extended position. When the drive shaft 32 and thus the barrel cam 34 is driven, as the barrel cam 34 is moved in the downward direction (see arrow D), the ball bearings 46 in the receiving openings 54 are guided along the guide path 44; specifically, the bearings 46 move from a home or stored position at a top of the vertical linear section 48 of path 44. In this manner, movement in the downward direction along the first linear section 48 results in the trailer hitch component 24 being at least partially exposed and positioned below the bumper 12 into an intermediate position before rotation is imparted thereon. In embodiments, the trailer hitch component 24 may be positioned horizontally and parallel to a length of the bumper 12 (i.e., with opening for attachment mechanism 26 of receiver being accessible in the Y-direction; see, e.g., FIG. 29) when moved to the intermediate position. Once the downward travel path along vertical linear section 48 reaches the helical path or section 50 (a predetermined amount), the barrel cam 34 is caused to start rotating. The rotation is accomplished by the continuing downward translation of the barrel cam 34 via the power actuator. Helical section 50 of each guide path 44 connects to a bottom portion of the linear section 48 and is designed to guide the nested ball bearings 46 around or about the axis A-A, thus allowing for rotation or pivotal movement of the barrel cam 34 about drive axis A-A and relative to outer housing 30. As shown in FIG. 8, as the barrel cam 34 continues to be driven to move in the downward direction, the ball bearings 46 in receiving openings 54 are guided along the helical section 50 such that rotational movement (or pivotal movement) is imparted onto the barrel cam 34 in the axial direction (see arrow R) and the barrel cam 34 is caused to rotate relative to the drive axis A-A and outer housing 30. Accordingly, then, during such rotational movement about helical section 50, the trailer hitch component 24 is rotated and moved such that it is positioned horizontally and perpendicular to the length of the bumper 12 (i.e., with opening for attachment mechanism 26 of receiver being accessible in the Z-direction; see, e.g., FIG. 1 or 30) after rotation. In accordance with embodiments, the helical section 50 is configured to turn or rotate the barrel cam 34, e.g., exactly or approximately ninety degrees.

Such configuration of this helical design contributes to the load transferring or handling mechanism, particularly for accommodating longitudinal loading. For example, load may be applied in the forward direction to the trailer hitch component 24, such as when the vehicle is braking and the trailer momentum is borne by the trailer hitch component 24. Locking section 52 of guide path 44 is connected to a lower end of the helical section 50 and extends linearly and parallel to the drive axis A-A according to embodiments herein. The corresponding ball bearings 46 may move linearly, or vertically up and down, relative to the drive axis A-A within locking section 52. FIG. 9 illustrates an example wherein further driving of the barrel cam 34 to the extended position causes the ball bearings 46 to move linearly further in a downward direction (see arrow D2) and into a locked position, wherein the barrel cam 34 is locked from rotation relative to the outer housing 30. When the retractable trailer hitch assembly 20 is in an extended position, the barrel cam 34 and its ball bearings 46 are positioned at a bottom portion of the locking section 52 of the guide path 44 (i.e., a bottom portion of the outer housing 30). Additionally, in this extended and locked position, the trailer hitch component 24 (and its attachment mechanism 26) is accessible below the bumper 12, facing the Z-direction, for use. Further details regarding the locked position and anti-rotation features are noted below. Generally, the travel along guide path 44 and rotation timing about helical section 50 are in line with the descent downward so that biting or jamming is reduced or prevented.

Turning back to FIG. 5, to drive the trailer hitch receiver 24 between its positions, motion is imparted via a driver onto the drive shaft 32 for axial rotation about axis A-A, according to embodiments herein. A driver may be operatively coupled to the retractable support member 34 and provided on the drive shaft 32. Such driver may be configured to translate linearly along the drive axis A-A in response to rotation of the drive shaft 32 to thereby move the retractable support member / barrel cam 34. In embodiments, the driver of the assembly 20 may include a drive block 60. In other embodiments, the driver of the assembly 20 may include a threaded casing 28A, which is shown and later described with reference to FIG. 27A, for example.

Drive block 60 (see also, e.g., FIG. 11) may be provided on drive shaft 32 and configured to translate along drive axis A-A, to move and drive barrel cam 34 relative to the outer housing 30 and for translation along drive axis A-A. Drive block 60 may be provided and connected to a top end of barrel cam 34, in accordance with embodiments herein. For example, as shown in the exemplary illustrated embodiments, the drive block 60 is connected to a top portion or interface 70 provided on the barrel cam 34. FIG. 10 shows an example of the interface 70 on an end of the barrel cam 34, which is relatively above the collar portion 56 (i.e., on the top end of the barrel cam 34, as shown in the Figures). Interface 70 includes the leading edge 71 and opening 72 for the central bore 31 of the barrel cam 34. Adjacent the leading edge 71 is a first interface portion 74 and a second interface portion 76 which surround the central bore 31, with a circumferential groove 75 therebetween. First interface portion 74 and second interface portion 76 each include an outer surface having an outer diameter which may act as piloting surfaces for assembling the drive block 60 onto the barrel cam 34, in accordance with embodiments herein. Adjacent the second interface portion 76 is an interfacing edge 78 provided on the radially extending collar portion 56, for interfacing with a bottom surface of drive block 60, according to embodiments.

In the exemplary illustrated embodiment, the drive block 60 includes a drive nut 36 surrounded by a drive housing 37 and a drive nut bushing 38. In addition to FIG. 5, such features are shown in greater detail in FIGS. 11-14. Specifically, FIG. 11 shows a detailed view, in partial cross-section, of translation mechanisms as well as some of the securement and anti-rotation mechanism features used when the retractable trailer hitch assembly 20 is in its extended position, and FIGS. 12-14 illustrate alternate cross-sectional views of such features. Drive nut 36 may include a body having a center opening 39, which is threaded for receipt of the threaded drive shaft 32 therein and therethrough (see, e.g., FIG. 13). An outer surface 41 (see FIG. 13) of the body of the drive nut 36 may include threads thereon for screwing onto a corresponding interface 45 of the drive housing 37. Drive nut bushing 38 surrounds the drive housing 37. The drive housing 37 and a drive nut bushing 38 may be piloted or positioned around the first interface portion 74 and second interface portion 76 (see FIGS. 12-13) of the interface 70 at the top portion of the barrel cam 34, thereby securing the drive nut 36 onto drive shaft 32, as shown in FIGS. 11 and 12. When the drive block 60 is assembled onto the drive shaft 32 and around barrel cam 34, a bottom edge of the drive nut 36 is spaced from the leading edge 71 to provide clearance. Further, a bottom surface of the drive nut bushing 38 is placed against (to interface with) interfacing edge 78 of the barrel cam 34. Generally, the threaded rod or drive shaft 32 is designed to rotate such that the drive nut 36 and block 60 are translated up and down / vertically along drive axis A-A, to allow for linear travel of the barrel cam 34 relative to and within outer housing 30.

While the threaded drive nut 36 is shown as a separate piece from the drive housing 37, it should be noted that such features may be integrally formed, whether secured together or instead formed as a single, unified piece of material.

In addition, rotary drive ball bearings 62 may be provided or positioned in drive block 60 (or driver) in accordance with embodiments, to allow for/permit and/or accommodate rotation thereof about the drive shaft 32 while maintaining axial translation. In embodiments, the retractable support member 34 may include a circumferential groove 75 for receiving the rotary drive ball bearings 62. The rotary drive ball bearings 62 may be secured between the drive housing 37 and drive nut bushing 38, for selective guidance within the circumferential groove 75 of the barrel cam. For example, as shown in the cross-sectional view of FIG. 13 and in FIG. 5, a bottom end of the drive housing 37 may include a number (e.g., three) of openings 64 provided in and spaced about a perimeter thereof. The number of openings 64 and ball bearings 62 is not limiting, and it is noted that three are shown for illustrative purposes only. Each ball bearing 62 may be positioned between circumferential groove 75 of the barrel cam 34 and a corresponding opening 64 of the drive housing 37. In embodiments, an opening 66 for each ball bearing 62 may also be provided in a bottom end of the drive nut bushing 38. A drive nut retention ring 68 may be included around the outside of the drive nut bushing 38, in accordance with embodiments. In an embodiment, the drive nut retention ring 68 may be a single retention ring, that would be preassembled then rotated to cover/retain the ball bearings 62 in position. In another embodiment, the drive nut retention ring 68 may be a split retention ring 68 (i.e., split/halved) wherein each half is assembled therearound, thereby providing ease to the assembly. The retention ring 68 holds rotary drive ball bearings 62 on the barrel cam 34 to thus further rotationally connect the barrel cam 34 to the outer housing 30 via allowing the center shaft to rotate. The rotary drive ball bearings 62 utilize the circumferential groove 75 as a track for rotation.

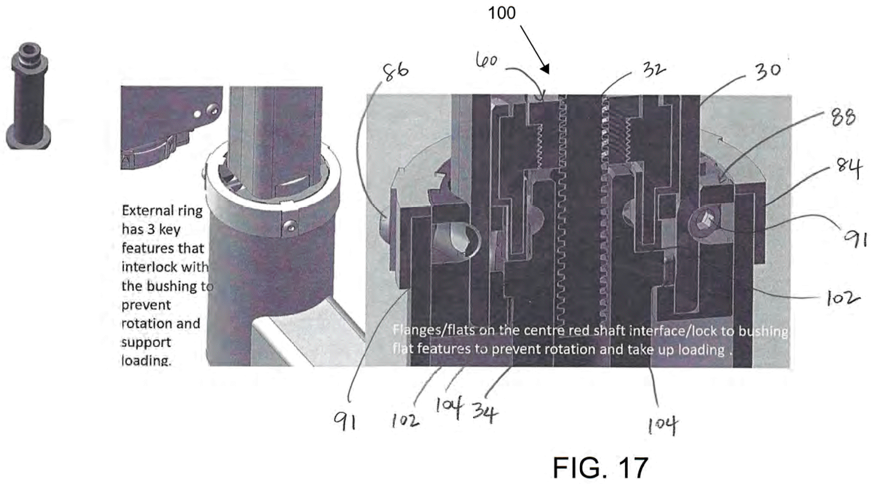

Accordingly, after rotation, the barrel cam 34 may be locked relative to the outer housing 30 in the extended position. In the views of FIG. 11-14, the drive block 60 is driven such that the trailer hitch receiver 24 is in the extended position. As shown in the cross sectional view of FIG. 12, in this position, the drive block 60 is adjacent the bottom end of the outer housing 30, with barrel cam 34 - and thus support tube 28 and trailer hitch receiver 24 - fully extended from the bottom thereof and in its locked position. FIG. 14 shows an alternate cross sectional view through the drive block 60 adjacent the bottom end of the outer housing 30, with barrel cam 34 and support tube 28 fully extended and in its locked position. FIG. 14 also shows flats 110 that are provided on the radial flange of collar portion 56 of the barrel cam 34, which are used for locking and load bearing, as described later below with reference to FIGS. 17, 18A-B, and 19A-B.

Turning back to FIG. 5, support tube 28 is connected to the barrel cam 34 in accordance with embodiments. Support tube 28 is configured to move with barrel cam 34 along drive axis A-A and relative to the outer housing 30, as shown in FIGS. 2 and 3. According to embodiments, support tube 28 includes a tubular body that has trailer hitch receiver 24 with attachment mechanism 26 connected thereto. To connect support tube 28 to barrel cam 34 for movement therewith, a base plate 80 may be provided for placement against a bottom end of the support tube 28. Base plate 80 includes openings therein for receiving fasteners 82 that are placed through its openings and secured into corresponding openings (not shown) provided on the bottom portion 79 of the barrel cam 34. In the illustrated embodiment, three fasteners 82 and openings are provided for securement; however, this number is illustrative only and not intended to be limiting.

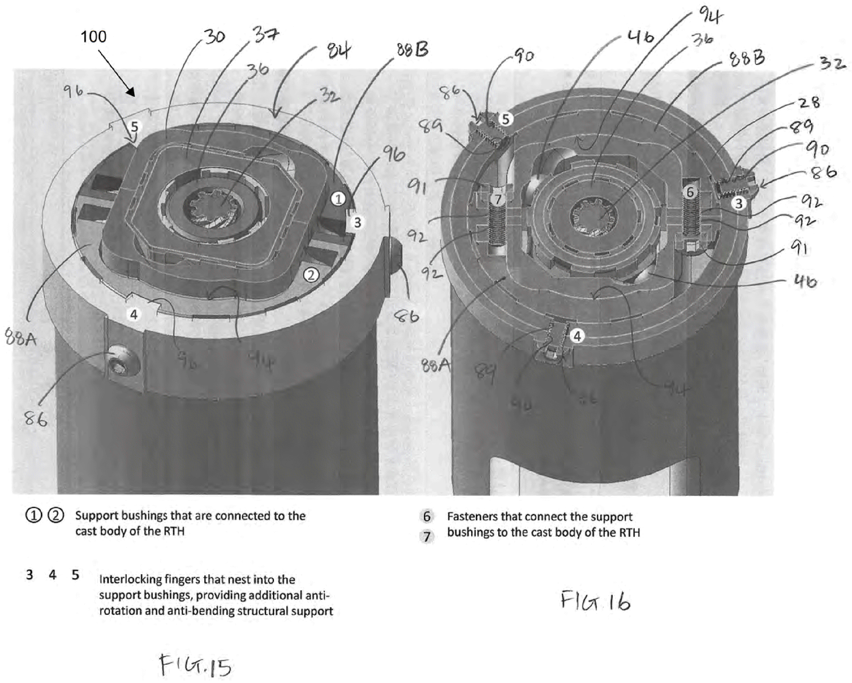

While bottom end of the support tube 28 may be secured to the bottom of the barrel cam 34, a top end of the support tube 28 may be stabilized relative to the outer housing 30 in a manner such that the support tube 28 may be guided linearly (i.e., vertically) along the outer housing 30. In embodiments, support tube lock ring 84 and support tube split-bushing 88 are provided with the support tube 28 for stabilization and load bearing. As described herein, in addition to relatively stabilizing tube 28 for movement along the outer housing 30, such features also assist in providing locking, anti-rotation, and anti-bending structural support to the retractable trailer hitch assembly 20, particularly when in the extended or deployed position. Support tube split-bushing 88 may be disposed around the outer housing 30 and retains support tube 28 for movement relative to the outer housing 30, e.g., via placement of the bushing within the tube 28 itself. Bushing 88 also forms part of the lock assembly 100 for locking barrel cam 34 in the extended position. As shown in FIG. 5, according to embodiments, support tube split-bushing 88 may include two bushing members 88A and 88B, each bushing member 88A and 88B forming a half of the split-bushing 88. In an embodiment, the split-bushing members 88A and 88B are formed with internal surfaces 94, seen in FIGS. 15 and 16, corresponding to a shape of the outer surfaces of outer housing 30. Support tube split-bushing members 88A and 88B are configured for alignment around the outer housing 30, as shown in the cross-sectional view of FIG. 16, at or adjacent the top end of the support tube 28, when assembled. To secure split-bushing members 88A and 88B to each other, bushing openings 92 (shown on split member 88A in FIG. 5, but also shown in FIG. 16) are provided on each member 88A and 88B, which are aligned so that bushing sub-assembly screws 91 may be inserted therethrough. The support tube 28 is positioned around the members 88A and 88B of the support tube split-bushing 88, i.e., the bushing 88 is positioned within a central opening at a top end of the support tube 28.

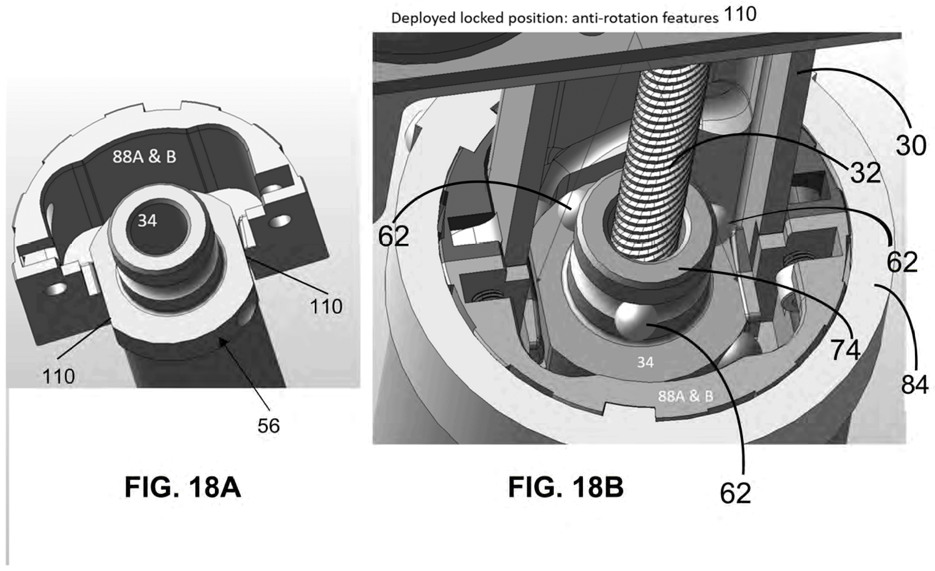

In addition to the shaped internal surfaces 94 on the members 88A and 88B for accommodating outer housing 30, split-bushing 88 also includes a number of surfaces 102, 104 therein that are part of locking assembly 100. Such features are described later below, with reference to FIGS. 18A-19B, for example. In the deployed, locked i.e. fully extended position, the barrel cam 34 is nested or locked within the outer housing 30, without direct interaction or contact, thus avoiding concerns with metal (e.g., steel-on-steel) contact for any moving parts. Support tube lock ring 84 and split-bushing members 88A and 88B are configured to be sandwiched/interfaced between these two parts to accomplish locking with flats 110 / contact surfaces on the barrel cam 34, as described below.

The assembly 20 may further include radially extending anti-rotation keys or stops configured to prevent rotation of the trailer hitch component 24 / receiver about the drive axis A-A. Support tube lock ring 84 is an external interlocking ring positioned around the support tube 28 and in alignment with the support tube split-bushing 88, as shown in FIGS. 15 and 16. Support tube lock ring 84 may be secured to support tube 28 via support tube lock ring fasteners 86 inserted through ring openings 90 which are aligned with number of holes 89 (see FIG. 5 and FIG. 16) spaced around a top end of the support tube 28 for receipt of ends of fasteners 86 therein. The number of openings 90 and holes 89 is not limiting, and it is noted that three are shown for illustrative purposes only. In embodiments, as shown in FIG. 15, for example, the lock ring 84 may include a number of anti-rotating features, such as fingers or keys 96, that extend from an internal surface thereof towards the support tube split-bushing 88, to effectively form an interface between the support tube 28 and the outer housing 30. For example, FIG. 15 shows the split-bushing members 88A and 88B positioned with internal surfaces 94 thereof positioned on and around the outer housing 30. Outer surfaces of the split-bushing members 88A and 88B may include a number of receiving portions 98 corresponding and configured to receive the keys 96 associated with the lock ring 84 therein. The keys 96 may be nested into the receiving portions 98 of the members 88A and 88B. As described with reference to FIGS. 18A-19B below, these features provide anti-rotation and anti-bending structural support, particularly in an extended position of the retractable trailer hitch assembly 20, in addition to the lock assembly 100.

The lock or lock assembly 100 of the assembly 20 for locking trailer hitch receiver 24 in at least the extended position includes several parts that may be provided on the barrel cam 34 and split bushing 88. In embodiments, the lock 100 includes at least one radial flange associated with the retractable support member 34 / barrel cam and one or more corresponding locking surfaces associated with the outer housing 30 that are configured to engage the at least one radial flange when in the retractable support member 34 is provided in the extended position to stabilize vertical movement and resist lateral and torsional loads. In some embodiments, the radial flange(s) may be provided as flat surface(s) on a collar portion 56, as previously mentioned. In addition, as previously noted, the flange of collar portion 56 may be configured to act as a down-stop or end of travel stop (no rotation) along the axis. For example, FIG. 10 shows in greater detail that collar portion 56 includes a pair of parallel flats 110 provided on the outer edge / engagement surface 58 on opposite axial sides of its flange, providing part of the lock 100. The flange limits or stops movement of the barrel cam 34 (when moved to the extended position) and flats 110 are surfaces configured to align with and engage corresponding locking surfaces 102, 104 on the split bushing 88 when in the extended position, thereby enabling stabilization with regards to vertical movement and resistances to lateral and torsional loads.

FIG. 17 illustrates a cross-sectional view of such parts of lock 100. Specifically, when the trailer hitch receiver 24 is moved into its extended position, and after rotation thereof, the flats 110 are moved via into alignment between the surfaces 102 of the split bushing 88 for engagement with the surfaces 104 thereof. That is, as the barrel cam 34 is driven linearly downward (i.e., moving balls bearings 46 into and through locking section 52 of the guide path 44 from helical section 50 so that the barrel cam 34 and its ball bearings 46 are positioned at a bottom portion of the locking section 52), the collar portion 56 is moved into engagement with the split bushing 88. Accordingly, the interfacing of surfaces 58, 110 of collar portion 56 on barrel cam 34 with the surfaces 102, 104 of the split bushing 88 provides a locking mechanism in addition to preventing rotation and taking up loads applied thereto.

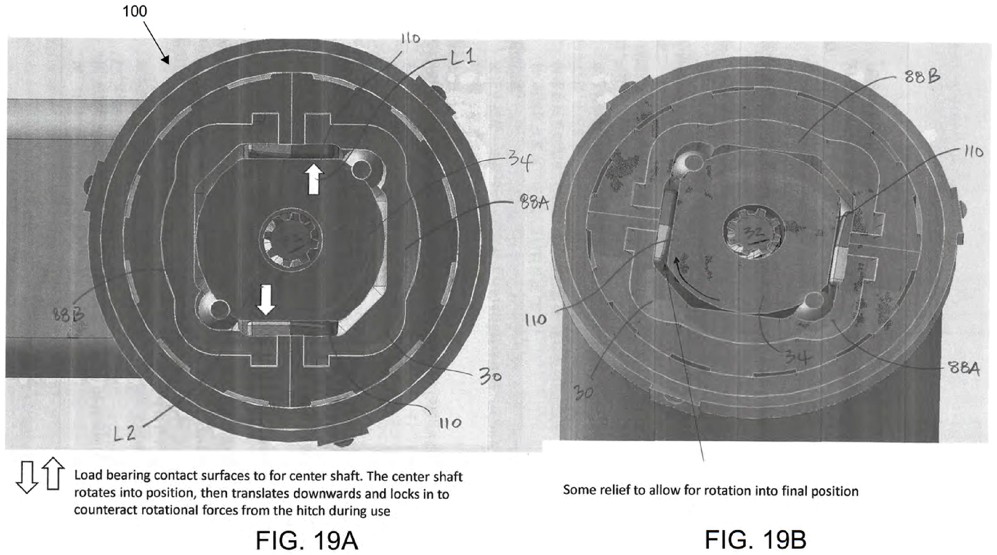

FIGS. 18A-B and 19A-B illustrate, in cross-sectional views, load bearing contact surfaces, forces, and alignment of anti-rotation mechanism features of the retractable trailer hitch assembly 20, in accordance with an embodiment. FIG. 18A shows a portion (i.e., member 88A or 88B) of the split-bushing 88 positioned around the barrel cam 34. As shown, the flange of collar portion 56 on barrel cam 34 interacts with the casing or housing 30 via the members 88A, 88B, when moved to a fully deployed or extended position, to act as a down-stop or end of travel stop. FIG. 18B shows these anti-rotation mechanism features, i.e., flats 110 in the fully extended or final position relative to the outer housing 30 and support tube 28, as well as additional features like ball bearings 62, drive shaft 32, and lock ring 84, for example. Arrows L1 and L2 in FIG. 19A similarly point to the flats 110 in cross-section view which are load bearing contact surfaces for the barrel cam 34. After the barrel cam 34 rotates into position and then translates downwards to move flange of the collar portion 56 into engagement with split bushing 88 as described above, the cam 34 locks in with respect to the split bushing 88 to counteract rotational forces R2, shown in FIG. 19B, as well as torque, from the trailer hitch receiver 24 during use. FIG. 19B also illustrates, in cross-section, an exemplary relief area provided between the barrel cam 34 and outer housing 30 which allows for rotation of the barrel cam 34 into its lowered or final position, when extended. Again, when the barrel cam 34 is rotated and then locked down into locking section 52, the flats 110 of the collar portion 56 are aligned with the corresponding surfaces 102 or flats on the bushing 88.

As such, a number of anti-rotation and loading bearing features are accomplished by the disclosed retractable trailer hitch assembly 20, which is designed to manage lateral loads in addition to longitudinal loading. For example, in the illustrated embodiment is a trailer imparts a force that is off-center to the trailer hitch component 24 so as to generate torque about the vertical axis A-A, the engagement of the flats 102/110 along with the three keys 96 locked into the members 88A and 88B of split bushing 88 provide a lock to prevent such rotation. That is, the outer locking features of keys 96 and the engaged surfaces 102, 110 work together to assist or help with rotational loads. Any force(s) applied to the flats 102 are transferred from the bushing 88 to the more structurally rigid outer housing 30 (formed of 30A and 30B), which ultimately transfers the load to the vehicle frame. This is advantageous as it avoids or minimizes the application of such loading to the moving components (e.g., center shaft 34) and any associated gearbox or actuator. This avoids damages to the gearbox and/or motor, or the center shaft 34, from any torque backloading that may be caused by longitudinal loading from the trailer during driving.

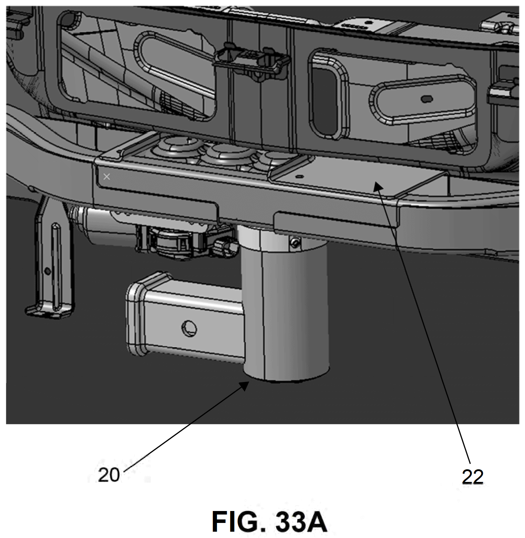

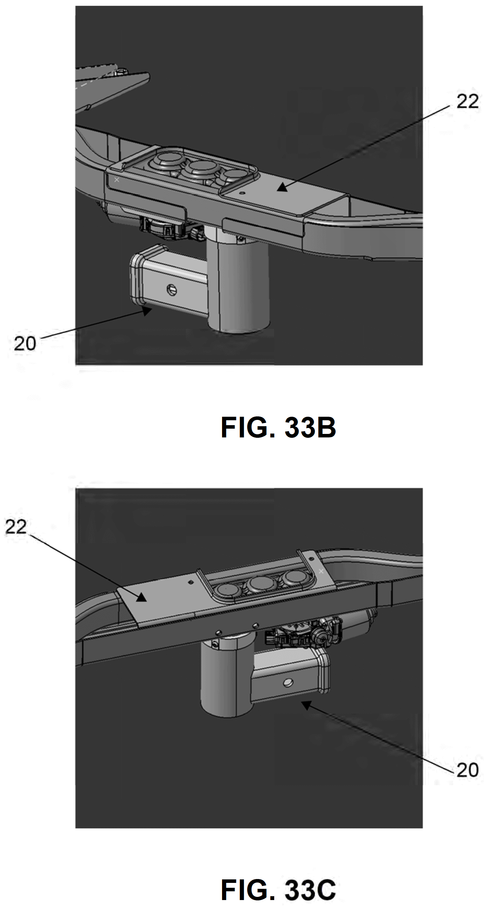

An example of the mounting of retractable trailer hitch assembly 20 is shown and described with reference to FIGS. 20-24. The mounting bracket 22 may be configured to at least partially envelop the connected gear cover 134 and gear box cover 132, such that the gear box assembly 120 may be mounted to the bumper 12 of the vehicle 10. In the illustrated embodiment, retractable trailer hitch assembly 20 is mounted in/within a center of the bumper 12 using mounting bracket 22, e.g., so that the loads applied to the retractable trailer hitch assembly 20 are secured and distributed relative to the vehicle 10. FIGS. 33A-33C illustrate front and back perspective views of a mounting bracket 22 for mounting the retractable trailer hitch assembly 20 or 20A to a vehicle, in accordance with embodiments herein. As shown, the mounting bracket 22 may be configured as an L-shaped or U-shaped bracket configured to envelop, for example, at least a portion of the gear box assembly 120 and/or its cover 132 for securement (e.g., via fasteners) to an inside of a bumper. In an embodiment, the bracket 22 may be secured to a portion of a carrier frame or beam of the bumper. The mounting bracket 22 may optionally include a cut-out portion to accommodate access to a portion of the gearbox, also shown in FIGS. 33A-33C.

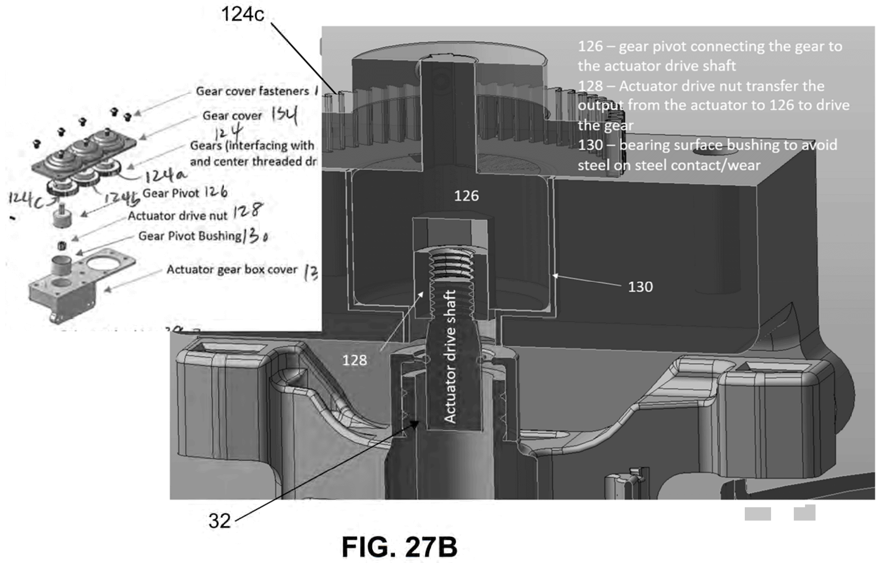

The mounting location of the trailer hitch assembly 20 that is illustrated in FIGS. 21-22, 23-24, and 33A-33C is just one contemplated location. For example, the trailer hitch assembly 20 may also be mounted beneath a vehicle frame, or in any location with suitable space and mounting structure. The embodiment shown is not intended to be limiting in any way. The mounting bracket 22 is configured to envelope actuation and mounting elements for the assembly 20. For example, as previously noted, drive shaft 32 may be a gear-driven, threaded rod driven via a powered actuator, e.g., a motorized actuator configured to rotate the drive shaft 32 and thus move the retractable support member 34 / barrel cam. In embodiments, a gear box assembly 120 may be provided, that is actuated via powered actuator 122, such as a motor, as shown in FIG. 5. Gear box assembly 120 may include a number of gears 124 (in this non-limiting example, three gears 124 are shown in FIG. 5) that are operatively connected to a gear pivot 126 and actuator drive nut 128. In the exemplary illustrated embodiment, the gears 124 are provided in a simple gear train wherein a first gear 124a is an input gear or driving gear, configured to move idler gear 124b, to drive output gear 124c or driven gear. Driven gear 124c of the gear train is directly connected to the gear pivot 126 and actuator drive nut 128 for operating drive shaft 32, which is also seen in FIG. 27B (the features of FIG. 27B show a detailed, cross-sectional view of features shown in FIG. 5, for example, yet are applicable to any number of embodiments herein). Surrounding gear pivot 126 may be a gear pivot bushing 130, which are placed into an opening of an actuator gear box cover 132, thereby containing the actuator drive nut 128 therebetween. Actuator drive nut 128 is configured to be mounted to a top end of the drive shaft 32. For example, in an embodiment, the threaded rod of drive shaft 32 may be positioned to extend through an opening in the actuator gear box cover 132. Actuator drive nut 128 transfers output from the actuator to 126 to drive the gear. Gear pivot bushing 130 provides a bearing surface to avoid metal-on-metal (e.g., steel-on-steel) contact resulting in wear. Flat bearing washers and thrust washers may be provided on a bottom side of the cover 132, whereas actuator drive nut 128 is provided on an opposite side and within the opening thereof. A gear cover 134 may be secured to actuator gear box cover 132 via fasteners 136, to contain the gears 124 and pivot and actuating mechanisms therein, forming the gear box assembly. FIGS. 3 and 4 illustrate front and back views of gear box assembly 120 when assembled and when the trailer hitch assembly 20 is in a retracted position.

Also shown in these Figures is the mounting of actuator 122 relative to the gear box assembly 120. It should be noted that while the power actuator 122 is shown as being mounted on top of the assembly 20, such placement is not intended to be limiting. For example, an actuator 122 and gear box assembly 120 may also be mounted in different locations to accommodate the environment. The actuator 122 may be configured for attachment such that it selectively drives input gear 124a when controlled or commanded to do so. As understood based on the previous description, the powered actuator 122 is designed to rotate the gears in the gear box, which is connected to the gear driven threaded rod / drive shaft 32. The drive shaft 32 rotates inside the threaded portion of the drive nut 36, to allow for up or down travel of the drive block 60. As the drive block 60 travels downwardly in the vertical direction, i.e., away from the inside of the bumper 12, the exterior set of ball bearings 46 interface with the guide path 44 of the outer housing 30, including the helical section 50, acting in a barrel-cam operation method. The ball bearings 46 along with the rotary drive ball bearings 62 in the drive block 60 control the translation and rotation of the trailer hitch receiver 24. Once the downward travel path through linear section 48 of guide path 44 reaches the helical path section 50, the center shaft/barrel cam 34 starts rotating. The rotation is accomplished by the continuing downward translation of the barrel cam 34 via the power actuator 122. The rotary drive ball bearings 62, interfacing between the drive nut 36 and circumferential groove 75 on the barrel cam 34, allow for low friction rotation. The ball bearings 46 continue to follow the helical section 50, thereby rotating at least the trailer hitch receiver 24 up to ninety degrees about the drive axis A-A, to achieve a perpendicular position of the receiver 24 in relation to the vehicle 10, as shown in FIGS. 1 and 23-24. The guide path 44 for ball bearings 46 then changes to a downward direction via locking section 52, to direct the barrel cam 34, and exterior casing i.e., keys 96 to lock into members 88A and 88B of the split bushing 88, to nest in locking features. Movement and driving of the drive shaft 32 continues until the barrel cam 34 bottoms out and locks against the anti-rotation stops or surfaces 102, 104 of the split bushing 88. At this point, the hitch receiver 24 is pointing perpendicular to the rear of the vehicle, in a locked position, ready for use. To retract the trailer hitch receiver 24, to the hidden/stow-away position or retracted position as shown in FIGS. 20-22, the power actuator 122 is designed to rotate in reverse, and thus reverses the operation.

It should thus be understood that this disclosure relates to retractable trailer hitch assembly designed to extend and retract a trailer hitch component on a vehicle using a drive shaft on a drive axis; an outer housing with the drive shaft extending therein; and a retractable support member movably mounted relative to and within the outer housing, configured to translate linearly along the drive axis based on rotation of the drive shaft. The component is fixed with respect to the support member. A rotational guide with guiding surfaces rotates the support member after it has translated linearly downwardly by a predetermined amount from a retracted position (rotated inwardly and raised vertically). The guiding surfaces are configured such that rotation moves the support member to an extended position, extending outwardly from the vehicle. A lock prevents rotation of the support member in the extended position providing load bearing support against force(s) applied to the component that create(s) a torque on the support member.

Another embodiment of a retractable trailer hitch assembly 20A with such features is shown in FIGS. 25-30. For purposes of clarity and brevity, like elements and components throughout the Figures are labeled with same designations and numbering as discussed with reference to FIGS. 2-24. Thus, although not discussed entirely in detail herein, one of ordinary skill in the art should understand that various features associated with the assembly 20A of FIGS. 25-30 are similar to those features previously discussed. Additionally, it should be understood that the features shown in each of the individual figures is not meant to be limited solely to the illustrated embodiments. That is, the features described throughout this disclosure may be interchanged and/or used with other embodiments than those they are shown and/or described with reference to.

In FIGS. 25-26, the retractable trailer hitch assembly 20A is shown in an extended position and retracted position, respectively; i.e., with regards to being mounted in an operative position, e.g., within the bumper 12, to the vehicle 10 via a mounting bracket 22. Like assembly 20, parts of the assembly 20A are configured to be mounted in a manner such that they are moved vertically and rotated horizontally relative to the bumper 12 or back end of the vehicle. In embodiments, the retractable trailer hitch assembly 20A includes the trailer hitch component 24, i.e., a receiver 24 with its attachment mechanism 26 (e.g., receiver tube) and connected to a support tube in the form of a threaded casing 28A, and an outer housing 30-1 mounted relative to a vertically extending drive shaft 32A extending along a drive axis A-A. In the exemplary illustrated embodiments shown in FIGS. 25-27A, for example, a retractable support member 34A is provided in the form of a barrel cam 34A that is configured to be selectively driven and translated along the drive axis A-A between at least two positions. According to embodiments, the assembly 20 further includes a rotational guide 27A (or rotational guide system) including guiding surfaces configured to rotate the retractable support member / barrel cam after the retractable support member has translated linearly downwardly by a predetermined amount from a retracted position, as previously described. The guiding surfaces may be configured such that the rotation moves the retractable support member / barrel cam 34A to the extended position wherein the trailer hitch component / receiver 24 extends outwardly from the vehicle. In this illustrated embodiment, a lock assembly or lock 100A is also provided in the assembly 20A in order to secure and lock trailer hitch receiver 24 in at least the extended position. The lock 100A acts as an anti-rotation mechanism for locking the trailer hitch receiver 24 in the extended position, so as to limit or prevent rotation of the trailer hitch receiver 24 and provide load bearing support against a force (e.g., longitudinal and lateral forces) applied to the trailer hitch component 24 / receiver that creates a torque on the retractable support member 34A.

Turning to FIG. 27A, the drive shaft 32A of assembly 20A is shown as a threaded rod 32A including a gear 124a associated therewith, such that the drive shaft 32A may be a gear-driven, threaded rod driven via powered actuator 122 (e.g., motor) and gear box, an example of which is described previously with reference to FIGS. 5 and 21-24. The drive shaft 32A extends through the outer housing 30-1 and along drive axis A-A. Movement of the drive shaft 32A is translated to the barrel cam 34A for its movement relative to outer housing 30-1. Barrel cam 34A includes a central shaft defined by a top portion with a leading edge 71A, a bottom portion 79A, and a central bore 31A therethrough. The central bore 31A receives at least a portion of the drive shaft 32A within the barrel cam 34A. Specifically, during driving movement, the drive shaft 32A may rotate within the central bore 31A. Barrel cam 34A will thus move along drive axis A-A and relative to the outer housing 30-1, using, e.g., a threaded casing 28A, as discussed later below.

As shown in FIG. 27A, the outer housing 30-1 may include two housing members 30-1A and 30-1B, each member 30-1A and 30-1B forming a half of the housing 30-1. Housing members 30-1A and 30-1B are configured for alignment around the drive shaft 32A, barrel cam 34A, threaded casing 28A, and other parts. The housing members 30-1A and 30-1B are aligned via corresponding holes (not shown) therein and assembled together via, for example, housing fasteners extending through aligned holes and secured via housing fastener locks nuts on fasteners, for example.

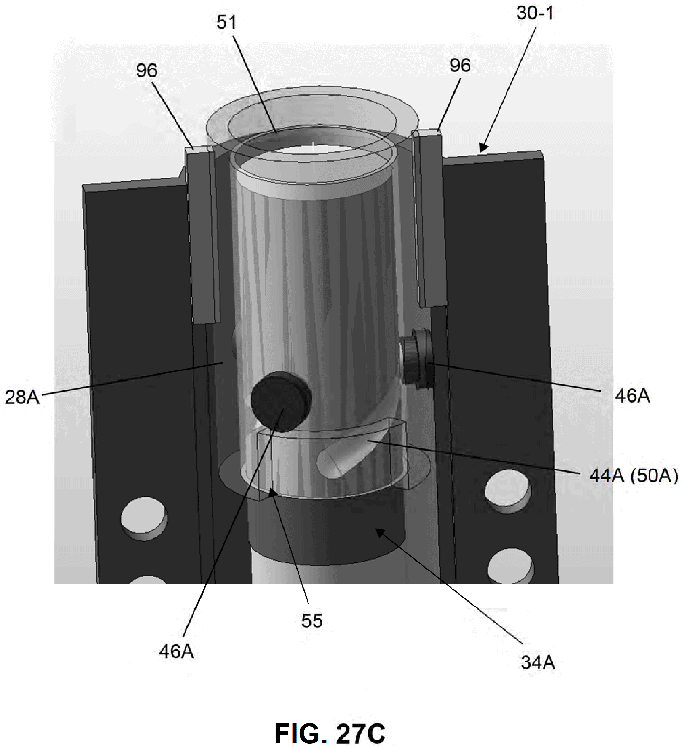

The rotational guide 27A (or rotational guide system) enables rotation of the retractable support member / barrel cam 34A after linear downward movement of a predetermined amount or distance from the retracted position. According to embodiments herein, the guiding surfaces include a helical section 50A configured to cause the rotation of the retractable support member 34A. In embodiments, the helical section 50A is configured to rotate the retractable support member 34A up to and including approximately 90 degrees as the retractable support member / barrel cam moves between the retracted position and the extended position. In the illustrated embodiment of FIG. 27A, each of the guiding surfaces / helical section 50A may be provided as a path 44A or groove on an outside or external surface 47 of the retractable support member 34A / barrel cam. Also, the rotational guide 27A may further include at least one ball bearing 46 configured to interface with and move along the guiding surfaces / grooves 50A, so as to cause the rotation of the retractable support member 34A. In some embodiments, the rotational guide 27A has two guiding surfaces 50A on opposite sides relative to one another, and two ball bearings 46 are provided for moving within the two guiding surfaces. FIG. 27C illustrates an example such guide paths 44A with helical sections 50A or grooves within the barrel cam 34A. The support tube or in this case, threading casing 28A, may be positioned relative to the retractable support member 34A; in such configuration, the retractable support member 34A and the support tube / threaded casing 28A may both be configured to translate linearly along the drive axis A-A in response to rotation of the drive shaft 32A.

Although one side of the external surface 47 of cam 34A is shown in FIG. 27A and 27C, it should be understood that two paths 44A may be provided on either side thereof. The guide path(s) 44A is/are designed to direct the barrel cam 34A for linear and/or rotational (or pivotal) movement along the drive axis A-A and relative to the outer housing 30-1, when assembled. The ball bearing(s) 46 may be nested within a ball bearing retainer 51 which is positioned on drive shaft 32A and configured to translate along drive axis A-A with threaded casing 28A. That is, the ball bearing retainer 51 includes holes for receiving ball bearings 46 therein allow the bearings 46 to extend or nest between the outside of the centered shaft / barrel cam 34A and inside of threaded casing 28A. In this design, upon actuation the barrel cam rotates until hitting a down stop/end travel. Ball bearing retainer 51 is assembled via being inserted into threaded casing 28A, then barrel cam 34A is inserted into retainer 51 & casing 28A sub assembly. The three ball bearings 46 are inserted into position, from the outside of the threaded casing 28A, through ball bearing retainer 51 and into the helical grooves 50A of barrel cam 34A. Optionally, retainer caps 46A may then be placed over each of the ball bearings 46. That is, upon assembly, the ball bearing(s) 46 is/are configured to interface with and move along the external guide path 44A on barrel cam 34A.

To drive the trailer hitch receiver 24 between its positions, motion is imparted via a driver onto the drive shaft 32A for axial rotation about axis A-A, according to embodiments herein. A driver may be operatively coupled to the retractable support member 34A and provided on the drive shaft 32A, and configured to translate linearly along the drive axis A-A in response to rotation of the drive shaft 32A to thereby move the retractable support member / barrel cam 34A. In this illustrated exemplary embodiment, the driver of the assembly 20 may include a threaded casing 28A. The threaded casing 28A is positioned relative to the barrel cam 34A such that it is configured to move and drive barrel cam 34A relative to the outer housing 30-1 and for translation along drive axis A-A. Threaded casing 28A may be provided and connected to a top end of barrel cam 34A, in accordance with embodiments herein. For example, as shown in the exemplary illustrated embodiments, the threaded casing 28A is connected to or positioned adjacent to leading edge 71A on the barrel cam 34A. In this embodiment, barrel cam 34A is configured to be driven linearly in a downward direction relative to the outer housing 30-1 towards an intermediate or partially extended position, via rotating threaded rod 32A / drive shaft about axis A-A. When the drive shaft 32A is driven, threaded casing 28A is driven downwardly along the rod, thereby pushing barrel cam 34A in the downward direction. This results in the trailer hitch component 24 being at least partially exposed and positioned below the bumper 12 into an intermediate position before rotation is imparted thereon. The ball bearings 46 remain in a home or stored position at a top of the of path 44A.

Barrel cam 34A includes one or more down stop flanges 27B which limits or stops movement of the barrel cam 34A in the downward direction via threaded rod 32A. That is, the down stop flanges 27B stops vertical movement of the barrel cam 34A via movement towards and/or engagement with a wall or element (e.g., an edge or end) on the outer housing 30-1. The trailer hitch component 24 may be positioned horizontally and parallel to a length of the bumper 12 (i.e., with opening for attachment mechanism 26 of receiver being accessible in the Y-direction; see, e.g., FIG. 29) when moved to the intermediate position. Once the downward travel path bottoms out with an edge or end of outer housing 30-1, the barrel cam 34A is caused to start rotating. In embodiments, down stop flange(s) 27B may be rotated into position below or underneath the anti-rotation stops 95, for example, as the barrel cam 34A rotates about axis A-A. The rotation is accomplished by the continuing downward translation of the barrel cam 34 via the threaded casing 28A. Threaded casing 28A still moves downwardly via drive shaft 32A causing the ball bearings 46 in the paths 44A to travel down along the paths 44A and force the barrel cam 34A to rotate about axis A-A, thus allowing for rotation or pivotal movement of the barrel cam 34A about drive axis A-A and relative to outer housing 30-1, without further downward movement. The ball bearings 46 are guided along the helical section 50 of path 44A such that rotational movement (or pivotal movement) is imparted onto the barrel cam 34A about the axis. Accordingly, then, during such rotational movement about helical section of path 44A, the trailer hitch component 24 is rotated and moved such that it is positioned horizontally and perpendicular to the length of the bumper 12 (i.e., with opening for attachment mechanism 26 of receiver being accessible in the Z-direction; see, e.g., FIG. 30) after rotation. In accordance with embodiments, the helical section 50 is configured to turn or rotate the barrel cam 34A exactly or approximately ninety degrees. Such configuration of this helical design contributes to the load mechanism, particularly for accommodating longitudinal loading.

Accordingly, after rotation, the barrel cam 34A may be locked via lock 100A relative to the outer housing 30-1 in the extended position (see, e.g., FIG. 25). According to embodiments, to lock the barrel cam 34A, notches 55 (see FIGS. 27A, 2B, and 27D) may be provided in the threaded casing 28A which may be moved into engagement with anti-rotation stops 95 (see FIGS. 27A and 27D) extending into the outer housing 30-1, which are part of the lock assembly. Accordingly, notches 55 act as an end stop and anti-rotation feature with stops 95 when engaged therewith. Further, as previously noted, down stop flanges 27B may positioned below or underneath the anti-rotation stops 95 according to embodiments herein, further assisting in locking the parts of assembly in the extended position.

Additionally, in this extended and locked position, the trailer hitch component 24 (and its attachment mechanism 26) is accessible below the bumper 12, facing the Z-direction, for use. Further details regarding the locked position and anti-rotation features are noted below. Generally, the travel along guide path 44A and rotation timing about helical section are in line with the descent downward so that biting or jamming is reduced or prevented.

The assembly 20 may further include radially extending anti-rotation keys 96 or stops configured to prevent rotation of the trailer hitch component 24 / receiver about the drive axis A-A. The keys 96 may be positioned within corresponding receiving holes in threaded casing 28A and designed for engagement with internal surfaces of the outer housing 30-1. FIGS. 27A-27F further illustrate assembly of keys 96 relative to and in engagement with threaded casing 28A, ball bearing retainer 51, and outer housing 30-1 (i.e., 30-1A and 301-B). Keys 96 acts as anti-rotation and locking features as previously described.

In an embodiment, a bracket 101 may be utilized to attach trailer hitch component / receiver 24 to the barrel cam 34A. Bracket 101 may be an L-bracket or similarly shaped design including a generally horizontal extending portion and an angled/vertically extending portion, such as shown in the Figures. For example, bracket 101 may include an opening through which barrel cam 34A is secured, with its bottom portion 79A provided there below (as shown in FIG. 26, for example). The trailer hitch receiver 24 may be secured (e.g., welded) to a front facing portion of the bracket 101, for example. However, the design and/or use of such a bracket is not intended to be limiting.

An example of the mounting of retractable trailer hitch assembly 20 is shown and described with reference to FIGS. 20-24, which similarly applies to the embodiment illustrated in FIGS. 25-30 and thus not repeated here other than to note that a mounting bracket may be utilized to secure the assembly 20A to the bumper 12 of the vehicle 10. In the illustrated embodiment, retractable trailer hitch assembly 20A is mounted in/within a center of the bumper 12, e.g., so that the loads applied to the retractable trailer hitch assembly 20A are secured and distributed relative to the vehicle 10. The mounting location of the assembly 20A that is illustrated in FIGS. 28-30 is just one contemplated location and the assembly 20A may also be mounted beneath a vehicle frame, or in any location with suitable space and mounting structure. The embodiment shown is not intended to be limiting in any way. A gear box assembly 120 may be provided, that is actuated via powered actuator 122, such as a motor, as shown in and described with reference, e.g., to FIG. 5 and FIG. 27B, and thus not repeated here. Gear box assembly (not labeled) may include a number of gears 124 (in this non-limiting example, two gears 124a, 124b are shown) in a simple gear train wherein a first gear 124a is an input gear or driving gear, configured drive output gear 124b or driven gear to drive the drive shaft 32A. As previously described, gears 124 (in this non-limiting example, two gears 124a, 124b are shown in FIG. 25) that are operatively connected to a gear pivot 126 and actuator drive nut 128, etc. for operating drive shaft 32A.

A gear cover may be secured to actuator gear box cover (both not shown) to contain the gears 124 and associated mechanisms and parts therein, forming a gear box assembly. Also shown in these Figures is the mounting of actuator 122 on top of the assembly 20A, which is not intended to be limiting. As understood based on the previous description, the powered actuator 122 is designed to rotate the gears in the gear box, which is connected to the gear driven threaded rod / drive shaft 32A. The drive shaft 32 rotates to drive threaded casing 28A and barrel cam 34A downwardly in the vertical direction, i.e., away from the inside of the bumper 12. After the barrel cam 34A bottoms out (e.g., with down stop flanges 27B under stops 95), the ball bearings 46 interface with and move along the helical section 50 of the guide path 44A on the barrel cam 34A to control the rotation of the trailer hitch receiver 24. Accordingly, the center shaft/barrel cam 34A rotates. Once the ball bearings 46 reach the bottom of the path 44A, the notches 55 of threaded casing 28 move into engagement with the stops 95 to lock against the anti-rotation stops 95. At this point, the hitch receiver 24 is pointing perpendicular to the rear of the vehicle, in a locked position, ready for use. To retract the trailer hitch receiver 24, to the hidden/stow-away position or retracted position as shown in FIGS. 26 and 28, the power actuator 122 is designed to rotate in reverse, and thus reverses the operation.

While the principles of the disclosure have been made clear in the illustrative embodiments set forth above, it will be apparent to those skilled in the art that various modifications may be made to the structure, arrangement, proportion, elements, materials, and components used in the practice of the disclosure.

It will thus be seen that the features of this disclosure have been fully and effectively accomplished. It will be realized, however, that the foregoing preferred specific embodiments have been shown and described for the purpose of illustrating the functional and structural principles of this disclosure and are subject to change without departure from such principles. The invention is as defined in the claims.

## Claims

1. A retractable trailer hitch assembly to extend and retract a trailer hitch component on a vehicle, the retractable trailer hitch assembly comprising:
the trailer hitch component;
a drive shaft extending along a drive axis and configured for rotational movement;
an outer housing mounted relative to the drive shaft with the drive shaft extending therein;
a retractable support member movably mounted relative to and within the outer housing, the retractable support member configured to translate linearly along the drive axis in response to rotation of the drive shaft, the trailer hitch component being fixed with respect to the retractable support member;
a rotational guide including guiding surfaces configured to rotate the retractable support member after said retractable support member has translated linearly downwardly by a predetermined amount from a retracted position wherein the trailer hitch component is rotated inwardly and
raised vertically from an extended position, the guiding surfaces being configured such that the rotation moves the retractable support member to the extended position wherein the trailer hitch component extends outwardly from the vehicle; and
a lock for preventing rotation of the retractable support member in the extended position to provide load bearing support against a force applied to the trailer hitch component that creates a torque on the retractable support member.

2. The retractable trailer hitch assembly according to claim 1, wherein the retractable support member comprises a barrel cam.

3. The retractable trailer hitch assembly according to claim 1 or 2, wherein the guiding surfaces are provided on the outer housing or on the retractable support member.

4. The retractable trailer hitch assembly according to any of the preceding claims, wherein the rotational guide further comprises at least one ball bearing configured to interface with and move along the guiding surfaces, so as to cause the rotation of the retractable support member, and
optionally, wherein the rotational guide has two guiding surfaces on opposite sides relative to one another, and wherein two ball bearings are provided for moving within the two guiding surfaces, or
optionally comprising a support tube positioned relative to the retractable support member, the retractable support member and the support tube both being configured to translate linearly along the drive axis in response to rotation of the drive shaft.

5. The retractable trailer hitch assembly according to claim 4, wherein the at least one ball bearing is nested between the retractable support member and the outer housing, and wherein the support tube surrounds the retractable support member, or
wherein the support tube comprises a threaded casing contained within the outer housing, wherein the at least one ball bearing is nested between the threaded casing and the outer housing, and wherein the threaded casing is configured to translate linearly along the drive axis in response to rotation of the drive shaft to move the retractable support member.

6. The retractable trailer hitch assembly according to claim 1, further comprising a driver operatively coupled to the retractable support member and provided on the drive shaft, the driver configured to translate linearly along the drive axis in response to rotation of the drive shaft to thereby move the retractable support member, and
optionally, wherein the driver comprises rotary drive ball bearings positioned therein to permit rotation about the drive shaft while maintaining axial translation, and wherein the retractable support member includes a circumferential groove for receiving the rotary drive ball bearings.

7. The retractable trailer hitch assembly according to claim 1, wherein the guiding surfaces comprise a helical section configured to cause the rotation of the retractable support member.

8. The retractable trailer hitch assembly according to claim 7, wherein the helical section is configured to rotate the retractable support member up to and including approximately 90 degrees as the retractable support member moves between the retracted position and the extended position, or
wherein the guiding surfaces further comprises at least one linear section extending parallel to the drive axis.

9. The retractable trailer hitch assembly according to claim 1, further comprising radially extending anti-rotation keys or stops configured to prevent rotation of the trailer hitch component about the drive axis.

10. The retractable trailer hitch assembly according to claim 1, wherein the lock includes:
at least one radial flange associated with the retractable support member; and
one or more corresponding locking surfaces associated with the outer housing configured to engage the at least one radial flange when in the retractable support member is provided in the extended position to stabilize vertical movement and resist lateral and torsional loads.

11. The retractable trailer hitch assembly according to claim 1, further comprising a mounting bracket for mounting the assembly in an operative position to the vehicle.

12. The retractable trailer hitch assembly according to claim 1, wherein the drive shaft is powered by a motorized actuator configured to rotate the drive shaft and thus move the retractable support member.

13. A vehicle comprising the assembly according to claim 1.
